(19) Europäisches Patentamt / European Patent Office / Office européen des brevets

(11) EP 4 132 994 B1

(12) EUROPEAN PATENT SPECIFICATION

(45) Date of publication and mention of the grant of the patent:
**19.06.2024 Bulletin 2024/25**

(21) Application number: **21716416.9**

(22) Date of filing: **02.04.2021**

(51) International Patent Classification (IPC):
***C08G 77/44*** (2006.01) ***C08G 77/452*** (2006.01)
***C08G 77/458*** (2006.01) ***C08L 83/04*** (2006.01)
***C08L 83/06*** (2006.01) ***C08L 83/08*** (2006.01)

(52) Cooperative Patent Classification (CPC):
(C-Sets available)
**C08G 77/44; C08G 77/452; C08G 77/458; C08L 83/04; C08L 83/06; C08L 83/08;** C08G 77/16; C08G 77/26 (Cont.)

(86) International application number:
**PCT/EP2021/058789**

(87) International publication number:
**WO 2021/204720 (14.10.2021 Gazette 2021/41)**

(54) **SILICONE-BASED THERMOPLASTIC MATERIALS FOR 3D-PRINTING**

THERMOPLASTISCHE MATERIALIEN AUF SILIKONBASIS FÜR 3D-DRUCK

MATÉRIAUX THERMOPLASTIQUES À BASE DE SILICONE POUR IMPRESSION 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.04.2020 EP 20315123**

(43) Date of publication of application:
**15.02.2023 Bulletin 2023/07**

(73) Proprietor: **Setup Performance SAS**
**38290 Frontonas (FR)**

(72) Inventors:
- **GIMENEZ, Jérôme**
  **38290 Frontonas (FR)**
- **DEME, Florian A.**
  **38290 Frontonas (FR)**
- **MAULET, Thomas B.**
  **38290 Frontonas (FR)**
- **ROCHETTE, Jean**
  **38290 Frontonas (FR)**

(74) Representative: **Cabinet Beau de Loménie**
**51 avenue Jean Jaurès**
**BP 7073**
**69301 Lyon Cedex 07 (FR)**

(56) References cited:
**US-A1- 2019 276 630 US-B1- 6 355 759**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 83/04, C08L 83/00, C08L 83/00, C08K 5/29, C08K 5/057;**
**C08L 83/04, C08L 83/00, C08L 83/00, C08L 83/00, C08K 5/057;**
**C08L 83/08, C08L 83/00, C08L 83/00, C08K 5/29, C08K 5/057;**
**C08L 83/08, C08L 83/00, C08L 83/00, C08L 83/00, C08K 5/057**

## Description

The invention relates to the preparation of a polyurea or polyurethane organopolysiloxane block copolymer and the use of the obtained polyurea or polyurethane organopolysiloxane block copolymer for the preparation of 3D articles by an additive technique.

A turning point has been reached in the last few years with the emergence of three-dimensional (3D) printing techniques allowing the production of custom and low-cost 3D articles. Using such technique, the 3D article is produced layer by layer. For this purpose, by means of upstream computer-aided design software (CAD), the 3D structure of the 3D article to be obtained is divided up into slices. The 3D article is then created by laying down successive slices or layers of material until the entire 3D article is produced. In other words, the slices are produced one by one in the form of layers, by carrying out the following binary sequence repeatedly:

. depositing a layer of the material necessary for producing the desired article, followed by

· agglomerating said layer and bonding said layer to the precedent if present in accordance with the predefined pattern.

Thus, the 3D article is constructed by superposing elementary layers that are bonded one to another.

Conventional 3D printing processes are limited to particular types of materials. These materials should be resistant to heat (i.e. no degradation should occur upon heating during the additive process), to moisture, to radiation and to weathering, should have a slow solidification time and an appropriate viscosity. Importantly, the slices or layers should adhere to one another in order to produce a 3D article with satisfactory mechanical strength that will not collapse. Ideally, the material should also have a low melting temperature and an appropriate viscosity. If the material is too viscous, the pressure needed to extrude it through the die is too high considering what a 3D printer can do. On the other hand, if the material is too fluid, the lastly deposited layer collapses immediately over the previous layer because of the lack of melt strength.

Regarding the mechanical properties and more specifically the hardness, conventional materials are considered hard if they have a Shore A hardness higher than 70. There is a need for materials with lower hardness, typically lower than 60 Shore A or even lower than 40.

Even if thermoplastics silicones are widely used in various fields, they are almost not used in the field of 3D printable materials. Interestingly, they have a good heat, radiation and weather stability. Moreover, they retain their elastic properties at relatively low temperatures, and stand out with a very low surface tension and a great soft touch feeling. However, their processability is usually insufficient to be used in an additive technique.

Patent application WO 2017/044735 describes a method of forming a 3D article with a 3D printer using thermoplastic silicone composition(s). The disclosed thermoplastic silicone compositions comprise a silicone in combination with other components. No information is provided about the hardness of the used thermoplastic silicone compositions, or their stability. Typically, for the type of thermoplastic silicone compositions exemplified, the hardness is medium, and may be not sufficiently low to be used in an additive technique, and in particular for printing of anatomical models. On the other hand, the 3D printing process requires a medium viscosity to optimise the flow of the material at high temperature, and to guaranty that the 3D article will not collapse after the layer deposition in order to preserve its mechanical stability. The use of a multicomponent composition may also raise a stability issue.

Therefore, there is a need for providing thermoplastic silicones that may be used in additive processes. Advantageously, such thermoplastic silicones should have a low hardness and a low melting temperature, in addition to the above-mentioned characteristics (resistance to heat, to moisture, to radiation, to weathering, slow solidification time, appropriate viscosity, adhesion of slices to each other). Moreover, there is always a need to provide material to be used in additive technique having improved properties.

To this end, the nature of the thermoplastic silicone should be tailored in order to have a rheology adapted to additive manufacturing technique. The applicant has therefore performed a research program to identify thermoplastic silicone block copolymers that may be adapted to this technical field.

Polyurethanes and polyureas are widely used for their high mechanical strength, elasticity, abrasion resistance and ease of processing. Therefore, the Applicant has looked for polyurethane and polyurea organopolysiloxane block copolymers having good mechanical properties, improved processability compared to silicones while keeping the positive properties of these polymers.

Document US 6,355,759 describes polydiorganosiloxane polyurea segmented copolymers, prepared from at least one polyisocyanate and at least one polyamine. The polyamine may be at least one polydiorganosiloxane diamine or a mixture of at least one polydiorganosiloxane diamine with at least one organic polyamine. The use in an additive process of these copolymers is not described.

Document US 2019/0276630 describes polysiloxanes based arerogels obtained by reacting a polydimethylsiloxane oligomer and an isocyanate in presence of a catalyst. These aerogels cannot be used in a 3D printing process

In this context, the Applicant has found that this may be achieved thanks to particular polyurea or polyurethane

organopolysiloxane block copolymers. Then, the claimed invention relates to these polyurea or polyurethane organopolysiloxane block copolymers, their method of preparation and their use in a method of manufacturing a 3D article by an additive technique and in particular for the preparation of anatomical models.

In particular, the invention relates to a process for preparing a polyurea or polyurethane organopolysiloxane block copolymer having a silicone content of at least 90% in weight relative to the total weight of the organosiloxane block copolymer and comprising the steps of:

1) providing the following compounds:

a) a long-chain hydroxyl or amino difunctionalised polysiloxane of formula **A:**

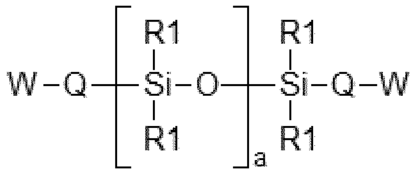

**(A),**

b) a chain extender which is a short-chain hydroxyl or amino difunctionalised polysiloxane of formula **B:**

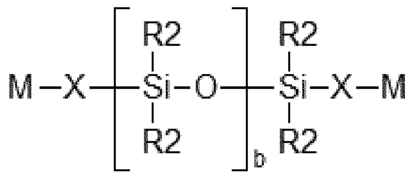

**(B),**

c) at least one diisocyanate of formula **C:**

O=C=N-Y-N=C=O **(C),**

d) optionally a branching agent which is a hydroxyl or amino monofunctional polysiloxane of formula **D:**

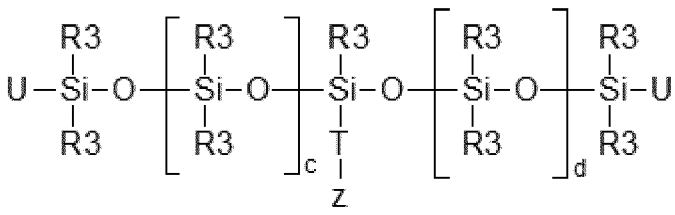

**(D),**

e) and a catalyst **E,**

2) adding **Nb** mol of the chain extender of formula **B), Nc** mol of the at least one diisocyanate of formula **C** and optionally **Nd** mol of the branching agent of formula **D,** to **Na** mol of the long-chain hydroxyl or amino difunctionalised polysiloxane of formula **A,**
wherein:

- **-Q-, -T-** and **-X-** are identical or different, and represent a (C1-C20) alkylene group, eventually in which one or more -$CH_2$- are replaced by -O-, or represent a (C6-C22) arylene group,
- **-M, -W and -Z** are identical or different, and represent -OH or-NH**R'**, with **-R'** representing -H, a (C1-C10) alkyl group, or a (C6-22) aryl group,
- **-U** is a (C1-C20) alkyl group, eventually in which one or more -$CH_2$-are replaced by -O-, or represents a (C6-C22) aryl group,
- -**Y-** represents a (C1-C36) alkylene group, or a (C6-C13) arylene group, or an organopolysiloxane,

- **-R1, -R2** and **-R3** are identical or different, and represent a (C1-C20) alkyl group, eventually substituted by one or more -F and/or-Cl,
- **a** is an integer ranging from 30 to 1000,
- **b** is an integer ranging from 2 to 15,
- **c** is an integer ranging from 10 to 200,
- **d** is an integer ranging from 10 to 200,
- the ratio **a/b** ranges from 2 to 200,
- the molar ratio **Nb** / **(Na** + **Nb** + **Nd)** ranges from 5% to 60%,
- the molar ratio **Nc** / **(Na** + **Nb** + **Nc** + **Nd)** ranges from 45 to 55%,
- the molar ratio **Nd** / **(Na** + **Nd)** ranges from 0 to 20%, and
- the hard segment ratio ranges from 1 to 94%, the hard segment ratio being defined by HS = **(Nb*Mb** + **Nc*Mc)** / **(Na*Ma** + **Nb*Mb** + **Nc*Mc** + **Nd*Md),** with **Ma, Mb, Mc** and **Md** representing respectively the molecular weight of compounds of formula **A, B, C** and **D.**

The process of manufacturing according to the invention further has advantageously one or more of the following characteristics:

- **-R1, -R2** and **-R3** are identical or different and represent a (C1-C10) alkyl group, and in particular methyl group, eventually substituted by -F and/or -Cl;
- **-Q-, -T-** and **-X-** are identical or different and represent a (C1-C10) alkylene group;
- **-M, -W and -Z** are identical and preferably represent -NH**R'** with **-R'** representing preferably -H;
- **-Y-** represents a (C3-C13) alkylene;
- only one diisocyanate of formula **C** is used;
- the at least one diisocyanate of formula **C** is present in stoichiometric proportions compared to compounds of formula **A, B** and **D** if present, meaning that the value of the stoichiometric index ratio **Ic** is equal to 1, the stoichiometric index ratio being defined by

$$\mathbf{Ic} = 2\mathbf{Nc} / (2\mathbf{Na} + 2\mathbf{Nb} + \mathbf{Nd});$$

- the at least one diisocyanate **C** is present in non-stoichiometric proportions compared to compounds of formula **A, B and D** if present, meaning that the value of the stoichiometric index ratio **Ic** is different from 1, and in particular superior to 1, the stoichiometric index ratio being defined by **Ic** = 2**Nc** / **(**2**Na** + 2**Nb** + **Nd),** and preferably the diisocyanate **C** is present in excess such that $1 < \mathbf{Ic} \leq 1.10$;
- the catalyst **E** is chosen among copper based catalysts, zirconium based catalysts, tin based catalysts and titanium based catalysts;
- the reaction is carried out in a chemical reactor;
- when the reaction is carried out in a chemical reactor, the long-chain polysiloxane of formula **A** is dissolved in a solvent, or a mixture of solvents, before the addition of the chain extender of formula **B,** the at least one diisocyanate of formula **C,** optionally the branching agent of formula **D,** and the catalyst **E;**
- when the reaction is carried out in a chemical reactor, the chain extender of formula **B,** the at least one diisocyanate of formula **C,** the branching agent of formula **D** if present, and the catalyst **E** are added simultaneously to the long-chain polysiloxane of formula **A;**
- when the reaction is carried out in a chemical reactor, the chain extender of formula **B,** the at least one diisocyanate of formula **C,** the branching agent of formula **D** if present, and the catalyst **E** are added one after the other to the polysiloxane of formula **A,** in any order;
- the reaction is carried out in an extruder, preferably a twin-screw extruder and the catalyst **E** is introduced in the first heating zone of the extruder;
- when the reaction is carried out in an extruder, the polysiloxane of formula **A,** the chain extender of formula **B,** the at least one diisocyanate of formula **C,** the branching agent of formula **D** if present, and the catalyst **E** are all introduced in the first heating zone of the extruder;
- when the reaction is carried out in a extruder, the polysiloxane of formula **A** is introduced in the first heating zone of the extruder, and at least one of the chain extender of formula **B,** the at least one diisocyanate of formula **C,** the branching agent of formula **D** if present, and the catalyst **E** are introduced in the second or subsequent heating zone of the extruder.

The invention further relates to the polyurea or polyurethane organopolysiloxane block copolymer obtained according to the process of manufacturing according to the invention. The polyurea or polyurethane organopolysiloxane

block copolymer according to the invention has advantageously one or more of the following characteristics:

- the polyurea or polyurethane organopolysiloxane block copolymer **I** according has a hardness ranging in the range of 0 to 60 Shore A;
- the polyurea or polyurethane organopolysiloxane block copolymer **I** has an elongation at break of at least 200% and preferably of at least 500%;
- the polyurea or polyurethane organopolysiloxane block copolymer **I** has a melting temperature ranging from 70 to 140 °C;
- the polyurea or polyurethane organopolysiloxane block copolymer **I** has a melt flow index ranging from 1 to 100 $cm^3$.10 $min^{-1}$ at 120°C under 2.16 kg.

The invention also relates to a method for manufacturing a 3D article by an additive technique using the polyurea or polyurethane organopolysiloxane block copolymer according to the invention. Advantageously, such article is manufactured with a 3D printer selected from a fused filament fabrication printer, droplet deposit printer, a selective laser sintering printer, a selective laser melting printer, a material jet printer and a syringe extrusion printer.

Finally, the invention relates to a 3D article obtained thanks to the method of manufacturing according to the invention. In the context of the invention, the printed material may be used in various fields, and in particular in the medical field, e.g. for the printing of anatomical models. In order to be used as anatomical model, the printed material must be smooth, sufficiently hard but not too much, and advantageously translucid.

**Figure 1** represents an ear model printed with the silicone based polyurea copolymer **CP1.2.**
**Figure 2** represents an ear model printed with the silicone based polyurea copolymer **CP1.2.**
**Figure 3** represents dumbbells printed with copolymer **CP1.4.**
**Figure 4** represents dumbbells printed with copolymer **CP1.4.**

## Process of manufacturing a polyurea or polyurethane organopolysiloxane block copolymer according to the invention

According to a first aspect, the invention relates to a process for preparing a polyurea or polyurethane organopolysiloxane block copolymer **I,** abbreviated **CP** hereafter. This **CP** is prepared by reaction of a long-chain hydroxyl or amino difunctionalised polysiloxane, a chain extender which is a short-chain hydroxyl or amino difunctionalised polysiloxane, at least one diisocyanate, optionally a branching agent which is a hydroxyl or amino monofunctional polysiloxane, and a catalyst.

- **Long-chain hydroxyl or amino difunctionalised polysiloxane**

According to the invention, the long chain hydroxyl or amino difunctionalised polysiloxane is of formula **A:**

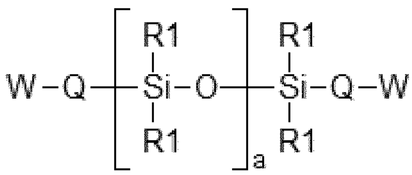

**(A),**

wherein:

- **-Q-** represents a (C1-C20) alkylene group, eventually in which one or more $-CH_2-$ are replaced by -O-, or represents a (C6-C22) arylene group,
- **-W** represents -OH or -NH**R',** with **R'** representing -H, a (C1-C10) alkyl group, or a (C6-22) aryl group,
- **-R1** represents a (C1-C20) alkyl group, eventually substituted by one or more -F and/or -Cl, and
- **a** is an integer ranging from 30 to 1000.

By "alkylene", it is meant a divalent alkyl group. Unless otherwise specified, the alkyl group may be branched or linear.

By "arylene", it is meant a divalent aryl group.

By "aryl", it is meant, unless otherwise specified, a mono-, bi- or polycyclic insaturated hydrocarbonated 5-24

membered ring comprising at least one aromatic ring. Phenyl, naphtyl, anthrancenyl, phenanthrenyl and cinnamyl are example of aryl groups.

Advantageously, **-W** represents -NH**R'**. According to this embodiment, **-R'** is preferably chosen among -H, a (C1-C10) alkyl group, and a (C6-18) aryl group, more preferably among -H, a (C1-C6) alkyl group, and a (C6-10) aryl group, and even more preferably among -H, a (C1-C6) alkyl group, and a C6-aryl group. In a particularly preferred embodiment, **-R'** is chosen among -H, and a (C1-C6) alkyl group such as methyl, ethyl, propyl, butyl, pentyl and hexyl. In a particular embodiment, **-W** represents $-NH_2$.

While not preferred, **-W** may represent -OH.

Advantantageously, **-Q-** represents a (C1-C10) alkylene group, eventually in which one or more $-CH_2-$ are replaced by -O-, or represents a (C6-C18) arylene group, more preferably (C1-C10) alkylene group, eventually in which one or more $-CH_2-$ are replaced by -O-, or a (C6-C10) arylene group, and even more preferably (C1-C10) alkylene group, eventually in which one or more $-CH_2-$ are replaced by -O-, or represents a C6-arylene group. Particularly preferred **-Q-** groups are (C1-C10) alkylene group, preferably (C2-C10) alkylene group, even more preferably (C2-C6) alkylene group, eventually in which one or more $-CH_2-$ are replaced by -O-. In a preferred embodiment no $-CH_2-$ of **-Q-** is replaced by -O-. As examples of preferred **-Q** groups, ethylene, propylene, butylene, pentylene and hexylene may be cited, and in particular propylene.

Advantageously, **-R1** represents a (C1-C10) alkyl group, eventually substituted by one or more -F and/or -Cl, preferably a (C1-C6) alkyl group eventually substituted by one or more -F and/or -Cl. Preferably, **-R1** is not substituted by any -F and/or -Cl. Examples of particularly preferred **-R1** groups are methyl, ethyl, propyl, butyl, pentyl and hexyl groups, and in particular methyl.

Advantageously, **a** is an integer ranging from 30 to 1000, preferably from 30 to 700, even more preferably from 30 to 400, and even more preferably 30 to 150.

In a particular embodiment, **-W** represents -NH**R'** with **-R'** as defined above, and **-Q-** represents a (C1-C10) alkylene group, eventually in which one or more $-CH_2-$ are replaced by -O-, or represents a (C6-C18) arylene group.

In a particular embodiment, **-W** represents -NH**R'** with **-R'** representing -H, a (C1-C10) alkyl group, or a (C6-18) aryl group , and **-Q-**represents a (C1-C10) alkylene group, eventually in which one or more $-CH_2-$are replaced by -O-.

In a particular embodiment, **-W** represents -NH**R'** with **-R'** representing -H, a (C1-C6) alkyl group, or a C6-aryl group, and **-Q-**represents a (C2-C10) alkylene group.

In a particular embodiment, **-W** represents $-NH_2$ and **-Q-** represents a (C2-C6) alkylene group.

In a particular embodiment, **-R1** represents (C1-C10) alkyl group eventually substituted by one or more -F and/or -Cl, **-W** represents -NH**R'** with **-R'** as defined above, and **-Q-** represents a (C1-C10) alkylene group, eventually in which one or more $-CH_2-$ are replaced by -O-, or represents a (C6-C18) arylene group.

In a particular embodiment, **-R1** represents a (C1-C6) alkyl group eventually substituted by one or more -F and/or -Cl, **-W** represents -NH**R'** with **-R'** representing -H, a (C1-C10) alkyl group, or a (C6-18) aryl group, and **-Q-** represents a (C2-C10) alkylene group, eventually in which one or more $-CH_2-$ are replaced by -O-.

In a particular embodiment, **-R1** represents a (C1-C6) alkyl group, **-W** represents -NH**R'** with **-R'** representing -H, a (C1-C6) alkyl group, or a C6-aryl group, and **-Q-** represents a (C2-C10) alkylene group.

In a particular embodiment, **-R1** represents a methyl group, **-W** represents $-NH_2$ and **-Q-** represents a (C2-C6) alkylene group.

In a preferred embodiment, **-R1** represents (C1-C10) alkyl group eventually substituted by one or more -F and/or -Cl, **-W** represents -NH**R'** with **-R'** as defined above, and **-Q-** represents a (C1-C10) alkylene group, eventually in which one or more $-CH_2-$ are replaced by -O-, or represents a (C6-C18) arylene group and **a** is an integer ranging from 30 to 1000, preferably 30 to 700.

In a particularly preferred embodiment, **-R1** represents a methyl group, **-W** represents $-NH_2$, **-Q-** represents a (C2-C6) alkylene group, and **a** is an integer ranging from 30 to 150.

As example of long chain hydroxyl or amino difunctionalised polysiloxane of formula **A** that may be used in the context of the invention, one may cite bisaminopropyl-terminated polydimethylsiloxane, such as Silmer NH Di-50 sold by Siltech.

- **chain extender**

According to the invention, the chain extender is a short-chain hydroxyl or amino difunctionalised polysiloxane of formula **B:**

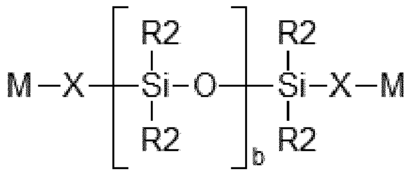

(**B**),

wherein:

- **-X-** represents a (C1-C20) alkylene group, eventually in which one or more $-CH_2-$ are replaced by -O-, or represents a (C6-C22) arylene group,
- **-M** represents -OH or -NH**R'**, with **-R'** representing -H, a (C1-C10) alkyl group, or a (C6-22) aryl group,
- **-R2** represents a (C1-C20) alkyl group, eventually substituted by one or more -F and/or -Cl,
- **b** is an integer ranging from 2 to 15.

Advantageously, **-X-** represents a (C1-C10) alkylene group, eventually in which one or more $-CH_2-$ are replaced by -O-, or represents a (C6-C18) arylene group, more preferably (C1-C10) alkylene group, eventually in which one or more $-CH_2-$ are replaced by -O-, or a (C6-C10) arylene group, and even more preferably (C1-C10) alkylene group, eventually in which one or more $-CH_2-$ are replaced by -O-, or represents a C6-arylene group. Particularly preferred **-X-** groups are (C1-C10) alkylene group, more preferably (C2-C10) alkylene group, even more preferably (C2-C6) alkylene group, eventually in which one or more $-CH_2-$ are replaced by -O-. In a preferred embodiment, no $-CH_2-$ of -X- is replaced by -O-. As examples of preferred **-X-** groups, ethylene, propylene, butylene, pentylene and hexylene may be cited, and in particular propylene.

Advantageously, **-M** represents -NH**R'.** According to this embodiment, **-R'** is preferably chosen among -H, a (C1-C10) alkyl group, or a (C6-18) aryl group, more preferably among -H, a (C1-C6) alkyl group, or a (C6-10) aryl group, and even more preferably among -H, a (C1-C6) alkyl group, or a C6-aryl group. In a particularly preferred embodiment, **-R'** is chosen among -H, and a (C1-C6) alkyl group such as methyl, ethyl, propyl, butyl, pentyl and hexyl. In a particular embodiment, **-M** represents $-NH_2$.

Advantageously, **-R2** represents a (C1-C10) alkyl group, eventually substituted by one or more -F and/or -Cl, preferably a (C1-C6) alkyl group eventually substituted by one or more -F and/or -Cl. Preferably, **-R2** is not substituted by any -F and/or -Cl. Examples of particularly preferred **-R2** groups are methyl, ethyl, propyl, butyl, pentyl and hexyl groups and in particular methyl.

Advantageously, **b** represents an integer ranging from 4 to 15, and preferably from 4 to 10.

In a particular embodiment, **-M** represents -NH**R'** with **-R'** as defined above, and **-X-** represents a (C1-C10) alkylene group, eventually in which one or more $-CH_2-$ are replaced by -O-, or represents a (C6-C18) arylene group.

In a particular embodiment, **-M** represents -NH**R'** with **-R'** representing -H, a (C1-C10) alkyl group, or a (C6-18) aryl group , and **-X-**represents a (C1-C10) alkylene group, eventually in which one or more $-CH_2-$are replaced by -O-.

In a particular embodiment, **-M** represents -NH**R'** with **-R'** representing -H, a (C1-C6) alkyl group, or a C6-aryl group, and **-X-**represents a (C2-C10) alkylene group.

In a particular embodiment, **-M** represents $-NH_2$ and **-X-** represents a (C2-C6) alkylene group.

In a particular embodiment, **-R2** represents (C1-C10) alkyl group eventually substituted by -F and/or -Cl, **-M** represents -NH**R'** with **-R'** as defined above, and **-X-** represents a (C1-C10) alkylene group, eventually in which one or more $-CH_2-$ are replaced by -O-, or represents a (C6-C18) arylene group.

In a particular embodiment, **-R2** represents a (C1-C6) alkyl group eventually substituted by -F and/or -Cl, **-M** represents -NH**R'** with **-R'** representing -H, a (C1-C10) alkyl group, or a (C6-18) aryl group , and **-X** represents a (C2-C10) alkylene group, eventually in which one or more $-CH_2-$are replaced by -O-.

In a particular embodiment, **-R2** represents a (C1-C6) alkyl group, **-M** represents -NH**R'** with **-R'** representing -H, a (C1-C6) alkyl group, or a C6-aryl group, and **-X-** represents a (C2-C10) alkylene group.

In a particular embodiment, **-R2** represents a methyl group, **-M** represents $-NH_2$ and **-X-** represents a (C2-C6) alkylene group.

In a preferred embodiment, **-R2** represents (C1-C10) alkyl group eventually substituted by -F and/or -Cl, **-M** represents -NH**R'** with **-R'** as defined above, **-X-** represents a (C1-C10) alkylene group, eventually in which one or more $-CH_2-$ are replaced by -O-, or represents a (C6-C18) arylene group, and **b** is an integer ranging from 4 to 15.

In a particularly preferred embodiment, **-R2** represents a (C1-C6) alkyl group, **-M** represents -NH**R'** with **-R'** representing -H, a (C1-C6) alkyl group, or a C6-aryl group, **-X-** represents a (C2-C10) alkylene group, and **b** is an integer ranging from 4 to 10.

As example of chain extender that may be used in the context of the invention, one may cite bisaminopropyl-terminated polydimethylsiloxane, such as Silmer NH Di-8 sold by Siltech.

- **Diisocyanate**

According to the invention, the diisocyanate(s) that may be used is of formula **C:**

O=C=N-Y-N=C=O **(C),**

wherein -**Y**- represents a (C1-C36) alkylene group, a (C6-C13) arylene group, or represents an organopolysiloxane.

When **-Y**- represents an organopolysiloxane, it may be of formula **F:**

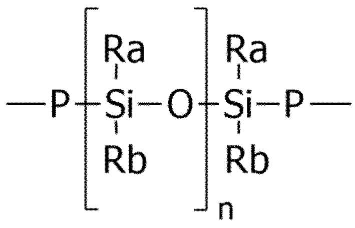

**(F)**

wherein:

- **-P-** represents a (C1-C20) alkylene group, eventually in which one or more $-CH_2-$ are replaced by -O-, or represents a (C6-C22) arylene group,
- **-Ra** and **-Rb** are identical or different and each represents a (C1-C20) alkyl group, eventually substituted by one or more -F and/or-Cl,
- **n** is an integer ranger from 4 to 50.

Advantageously, **-P-** represents a (C1-C10) alkylene group, eventually in which one or more $-CH_2-$ are replaced by -O-, or represents a (C6-C18) arylene group, more preferably (C1-C10) alkylene group, eventually in which one or more $-CH_2-$ are replaced by -O-, or a (C6-C10) arylene group, and even more preferably (C1-C10) alkylene group, eventually in which one or more $-CH_2-$ are replaced by -O-, or represents a C6-arylene group. Particularly preferred **-P-** groups are (C2-C10) alkylene group, preferably (C2-C6) alkylene group, eventually in which one or more $-CH_2-$ are replaced by -O-. In a preferred embodiment, no $-CH_2-$ of **-P-** is replaced by -O-. As examples of preferred **-P-** groups, ethylene, propylene, butylene, pentylene and hexylene may be cited, and in particular $-(CH_2)_3-$.

Advantageously, **-Ra** and **-Rb** are identical or different and each represents a (C1-C10) alkyl group, eventually substituted by one or more -F and/or -Cl, preferably a (C1-C6) alkyl group eventually substituted by one or more -F and/or -Cl. Preferably, **-Ra** and **-Rb** are not substituted by any -F and/or -Cl. Examples of particularly preferred **-Ra** and **-Rb** groups are methyl, ethyl, propyl, butyl, pentyl and hexyl groups, and in particular methyl group. Preferably, **-Ra** and **-Rb** are identical.

Preferably, **n** is an integer ranging from 6 to 30.

In a particular embodiment, **-P-** represents a (C1-C10) alkylene group, eventually in which one or more $-CH_2-$ are replaced by -O-, or represents a (C6-C18) arylene group, and **-Ra** and **-Rb** are identical or different and both represent a (C1-C10) alkyl group, eventually substituted by one or more -F and/or -Cl.

In a particular embodiment, **-P-** represents a (C1-C10) alkylene group, eventually in which one or more $-CH_2-$ are replaced by -O-, or represents a C6-arylene group and **-Ra** and **-Rb** are identical or different and both represent a (C1-C6) alkyl group, eventually substituted by one or more -F and/or -Cl.

In a preferred embodiment, **-P-** represents a (C2-C10) alkylene group, preferably (C2-C6) alkylene group, and **-Ra** and **-Rb** are identical or different and both represent a (C1-C6) alkyl group.

In a particularly preferred embodiment, **-P-** represents a propylene group and **-Ra** and **-Rb** both represent a methyl.

Diisocyanates of formula **C** may be aliphatic or aromatic diisocyanates.

Examples of aliphatic diisocyanates are isophorone diisocyanate, hexamethylene 1,6-diisocyanate, tetramethylene 1,4-diisocyanate, dimeryl diisocyanate and methylenedicyclohexyl 4,4'-diisocyanate. A particularly preferred aliphatic diisocyanate is hexamethylene 1,6-diisocyanate.

Examples of aromatic diisocyanates are methylenediphenyl 4,4'-diisocyanate, 2,4-toluene diisocyanate, 2,5-toluene diisocyanate, 2,6-toluene diisocyanate, m-phenylene diisocyanate, p-phenylene diisocyanate, m-xylene diisocyanate, tetramethyl m-xylene diisocyanate, naphthalene 1,5-diisocyanate or mixtures of these isocyanates.

In a preferred embodiment, diisocyanates of formula **C** are aliphatic diisocyanates. According to this embodiment, **-Y**- preferably represents a (C2-C36) alkylene, preferably a (C2-C20) alkylene not substituted by any -Cl and/or -F, and even more preferably a (C3-C13) alkylene.

An example of commercially available compounds are the diisocyanates of the DESMODUR(R) series (H, I, M, T, W) from Bayer AG, Germany.

- **branching agent**

According to the invention, the branching agent is a hydroxyl or amino monofunctional polysiloxane of formula D:

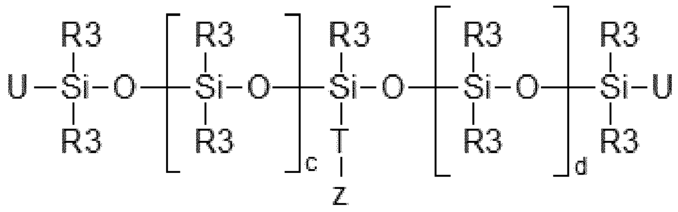

**(D),**

wherein:

- **-T-** represents a (C1-C20) alkylene group, eventually in which one or more $-CH_2-$ are replaced by -O-, or represents a (C6-C22) arylene group,
- **-Z** represents -OH or -NH**R'**, with **-R'** representing -H, a (C1-C10) alkyl group, or a (C6-22) aryl group,
- **- U** is a (C1-C20) alkyl group, eventually in which one or more $-CH_2-$are replaced by -O-, or represents a (C6-C22) aryl group,
- - **R3** represents a (C1-C20) alkyl group, eventually substituted by one or more -F and/or -Cl,
- **c** is an integer ranging from 10 to 200, and
- **d** is an integer ranging from 10 to 200.

Advantageously, **-T-** represents a (C1-C10) alkylene group, eventually in which one or more $-CH_2-$ are replaced by -O-, or represents a (C6-C18) arylene group, more preferably (C1-C10) alkylene group, eventually in which one or more $-CH_2-$ are replaced by -O-, or a (C6-C10) arylene group, and even more preferably (C1-C10) alkylene group, eventually in which one or more $-CH_2-$ are replaced by -O-, or represents a C6-arylene group. Particularly preferred **-T-** groups are (C1-C10) alkylene group, more preferably (C2-C10) alkylene group, even more preferably (C2-C6) alkylene group, eventually in which one or more $-CH_2-$ are replaced by -O-. In a preferred embodiment no $-CH_2-$ of **-T-** is replaced by -O-. As examples of preferred **-T-** groups, ethylene, propylene, butylene, pentylene and hexylene may be cited, and in particular ethylene.

Advantageously, **-Z** represents -NH**R'**. According to this embodiment,-**R'** is preferably chosen among -H, a (C1-C10) alkyl group, or a (C6-18) aryl group, more preferably among -H, a (C1-C6) alkyl group, or a (C6-10) aryl group, and even more preferably among -H, a (C1-C6) alkyl group, or a C6-aryl group. In a particularly preferred embodiment, **-R'** is chosen among -H, and a (C1-C6) alkyl group such as methyl, ethyl, propyl, butyl, pentyl and hexyl. In a particular embodiment, **-Z** represents $-NH_2$.

Advantageously, **-R3** represents a (C1-C10) alkyl group, eventually substituted by one or more -F and/or -Cl, preferably a (C1-C6) alkyl group eventually substituted by one or more -F and/or -Cl. Preferably, **-R3** is not substituted by any -F and/or -Cl. Examples of particularly preferred **-R3** groups are methyl, ethyl, propyl, butyl, pentyl and hexyl groups, and in particular methyl.

Advantageously, **-U** represents a (C1-C10) alkyl group, eventually in which one or more $-CH_2-$ are replaced by -O-, or represents a (C6-C18) aryl group. Preferably, **-U** represents a (C1-C6) alkyl group, eventually in which one or more $-CH_2-$ are replaced by -O-, or represents a (C6-C10) aryl group. Even more preferably, **-U** represents a (C1-C6) alkyl group, or represents a C6-aryl group. Examples of particularly preferred **-U** groups are phenyl, methyl, ethyl, propyl, butyl, pentyl, hexyl, phenyloxy, methyloxy, ethyloxy, propyloxy, butyloxy, pentyloxy, and hexyloxy groups, and in particular, ethyloxy, propyloxy.

Advantageously, **c** represents an integer ranging from 10 to 150, preferably from 50 to 150, and even more preferably from 50 to 120.

Advantageously, **d** represents an integer ranging from 10 to 150, preferably from 50 to 150, and even more preferably from 50 to 120.

In a particular embodiment, both **c** and **d** represent an integer ranging from 10 to 150, and preferably from 50

to 120.

In a particular embodiment, **-Z** represents -NH**R'** with **-R'** as defined above, and **-T-** represents a (C1-C10) alkylene group, eventually in which one or more -$CH_2$- are replaced by -O-, or represents a (C6-C18) arylene group.

In a particular embodiment, **-Z** represents -NH**R'** with **-R'** representing -H, a (C1-C10) alkyl group, or a (C6-18) aryl group , and **-T-** represents a (C2-C10) alkylene group, eventually in which one or more -$CH_2$- are replaced by -O-.

In a particular embodiment, **-Z** represents -NH**R'** with **-R'** representing -H, a (C1-C6) alkyl group, or a C6-aryl group, and **-T-** represents a (C2-C10) alkylene group.

In a particular embodiment, **-Z** represents -$NH_2$ and **-T-** represents a (C2-C6) alkylene group.

In a particular embodiment, **-R3** represents (C1-C10) alkyl group eventually substituted by one or more -F and/or -Cl, **-Z** represents -NH**R'** with **-R'** as defined above, **-U** represents a (C1-C10) alkyl group , eventually in which one or more -$CH_2$- are replaced by -O-, or represents a (C6-C18) aryl group and **-T-** represents a (C1-C10) alkylene group, eventually in which one or more -$CH_2$- are replaced by -O-, or represents a (C6-C18) arylene group.

In a particular embodiment, **-R3** represents a (C1-C6) alkyl group eventually substituted by one or more -F and/or -Cl, **-Z** represents -NH**R'** with **-R'** representing -H, a (C1-C10) alkyl group, or a (C6-18) aryl group, **-U** represents a (C1-C6) alkyl group, eventually in which one or more -$CH_2$- are replaced by -O-, or represents a (C6-C10) aryl group and **-T-** represents a (C2-C10) alkylene group, eventually in which one or more -$CH_2$- are replaced by -O-.

In a particular embodiment, **-R3** represents a (C1-C6) alkyl group, **-Z** represents -NH**R'** with **-R'** representing -H, a (C1-C6) alkyl group, or a C6-aryl group, and **-T-** represents a (C2-C10) alkylene group.

In a particular embodiment, **-R3** represents a methyl group, **-Z** represents -$NH_2$, **-U** represents a (C1-C6) alkyl group, or represents a C6-aryl group, and **-T-** represents a (C2-C6) alkylene group.

In a preferred embodiment, **-R3** represents a (C1-C10) alkyl group eventually substituted by -F and/or -Cl, **-Z** represents -NH**R'** with **-R'** as defined above, **-U** represents a (C1-C10) alkyl group eventually in which one or more -$CH_2$-are replaced by -O-, or represents a (C6-C18) aryl group, and **-T-** represents a (C1-C10) alkylene group, eventually in which one or more-$CH_2$- are replaced by -O-, or represents a (C6-C18) arylene group, **c** and **d** are both integer ranging from 50 to 150.

In a particularly preferred embodiment, **-R3** represents a methyl group, **-Z** represents -$NH_2$, **-U** represents a (C1-C6) alkyl group or represents a C6-aryl group, and **-T-** represents a (C2-C6) alkylene group, **c** and **d are** both integer ranging from 50 to 120.

As a particular branching agent, one may cite branched monoaminoethyl-functional polydi methylsiloxane.

- **Catalyst**

According to the invention, the **CP** is synthetized using a catalyst **E.**

Suitable catalysts are organometallic compounds such as tin-based, titanium-based, copper-based or zirconium-based compounds. In particular, suitable catalysts may be chosen among dialkyl tin derivatives, alkyl titanium derivatives, ester zirconium derivatives and keto copper derivatives.

According to a first embodiment, the catalyst **E** is a tin based catalyst. Examples of tin based catalysts that may be used in the process according to the invention are tributyltin methanolate, dilaurate dibutyltin, octoate dibutyltin, and dialkyltin dicarboxylate.

According to a second embodiment, the catalyst **E** is a titanium based catalyst, such as tetra-n-butyl titanate, titanium (triethanolaminato)isopropoxide, and titanium 2-ethylhexyloxide.

According to a third embodiment, the catalyst **E** is a copper based catalyst, such as β-diketoester, and β-dikenato copper complexes.

According to a third embodiment, the catalyst **E** is a zirconium based catalyst, such as tetrakis(2,4-pentanedionate) zirconium, monoalcoholate zirconium, and zirconium acetylacetonate.

- **Preferred embodiments**

According to an embodiment:

- **-Q-, -T-** and **-X-** are identical or different, and represent a (C1-C10) alkylene group, eventually in which one or more -$CH_2$- are replaced by -O-, or represent a (C6-C18) arylene group,
- **-M, -W and -Z** are identical or different, and represent -NH**R',** with **-R'** representing -H, a (C1-C10) alkyl group, or a (C6-22) aryl group,
- **-U** is a (C1-C10) alkyl group, eventually in which one or more -$CH_2$-are replaced by -O-, or represents a (C6-C18) aryl group,
- **-Y-** represents a (C2-C36) alkylene,
- **-R1, -R2** and **-R3** are identical or different, and represent a (C1-C10) alkyl group, eventually substituted by one or

more -F and/or-Cl,

- **a** is an integer ranging from 30 to 1000,
- **b** is an integer ranging from 2 to 15,
- **c** is an integer ranging from 10 to 200,
- **d** is an integer ranging from 10 to 200,
- the ratio **a/b** ranges from 2 to 200.

According to another embodiment:

- **-Q-, -T-** and **-X-** are identical or different, and represent a (C2-C10) alkylene group, eventually in which one or more $-CH_2-$ are replaced by -O-, or represent a (C6-C18) arylene group,
- **-M, -W** and **-Z** are identical or different, and represent -NH**R',** with **-R'** representing -H, a (C1-C10) alkyl group, or a (C6-18) aryl group,
- **-U** is a (C1-C6) alkyl group, eventually in which one or more $-CH_2-$are replaced by -O-, or represents a (C6-C10) aryl group,
- **-Y-** represents a (C2-C20) alkylene,
- **-R1, -R2** and **-R3** are identical or different, and represent a (C1-C6) alkyl group, eventually substituted by one or more -F and/or -Cl,
- **a** is an integer ranging from 30 to 700,
- **b** is an integer ranging from 4 to 15,
- **c** is an integer ranging from 10 to 150,
- **d** is an interger ranging from 10 to 150,
- the ratio **a/b** ranges from 2 to 100.

According to another embodiment:

- **-Q-, -T-** and **-X-** are identical or different, and represent a (C2-C10) alkylene group, or represent a (C6-C10) arylene group,
- **-M, -W and -Z** are identical or different, and represent -NH**R',** with **-R'** representing -H, a (C1-C6) alkyl group, or a C6-aryl group, and preferably -H,
- **-U** is a (C1-C6) alkyl group,
- **-Y-** represents a (C3-C13) alkylene,
- **-R1, -R2** and **-R3** are identical or different, and represent a (C1-C6) alkyl group,
- **a** is an integer ranging from 30 to 400,
- **b** is an integer ranging from 4 to 10,
- **c** is an integer ranging from 50 to 150,
- **d** is an integer ranging from 50 to 150,
- the ratio **a/b** ranges from 3 to 40.

Advantageously, the ratio **a/b** ranges from 2 to 200, preferably from 2 to 100, more preferably from 3 to 40 and even more preferably from 6 to 15.

Advantageously, **-R1**, **-R2** and **-R3** are identical, and preferably represent a (C1-C6) alkyl group.

Advantageously, **-Q-, -T-** and **-X-** are identical and preferably represent a (C2-C10) alkylene group.

Advantageously, **-M, -W and -Z** are identical and preferably represent $NH_2$.

According to another embodiment:

- **-Q-, -T-** and **-X-** are identical or different, and represent a (C2-C6) alkylene group, or represent a C6-aryl group,
- **-M, -W** and **-Z** are identical or different, and represent -NH**R',** with **-R'** representing -H, a (C1-C6) alkyl group and preferably -H,
- **-U** is a (C1-C6) alkyl group,
- **-Y-** represents a (C3-C13) alkylene,
- **-R1, -R2** and **-R3** are identical or different, and represent a (C1-C6) alkyl group,
- **a** is an integer ranging from 30 to 150,
- **b** is an integer ranging from 4 to 10,
- **c** is an integer ranging from 50 to 120,
- **d** is an integer ranging from 50 to 120,
- the ratio **a/b** ranges from 6 to 15.

- **Reaction conditions**

According to a preferred embodiment, only one diisocyanate is used in the process of manufacturing according to the invention. While not preferred, more than one diisocyanate may be used, and for example 2 or 3 diisocyanates. In this latest embodiment, the diisocyanates may be introduced all at the same time, or stepwise.

In the context of the invention, **Na, Nb, Nc,** and **Nd** represent respectively the number of moles of the long-chain hydroxyl or amino difunctionalised polysiloxane of formula **A,** the chain extender of formula **B,** the at least one diisocyanate of formula **C,** and the branching agent of formula **D.**

Advantageously, the molar ratio **Nb** / **(Na** + **Nb** + **Nd)** ranges from 5% to 60%, preferably from 15% to 45%, even more preferably from 20% to 30%.

Advantageously, the molar ratio **Nc** / **(Na** + **Nb** + **Nc** + **Nd)** ranges from 45% to 55%, preferably from 48 to 53% and even more preferably from 49% to 52%.

Advantageously, the molar ratio **Nd** / **(Na** + **Nd)** ranges from 0 to 20%, preferably from 0% to 5%.

Catalyst concentration is typically ranging from 5 to 300 ppm in weight, and preferably from 5 to 200 ppm in weight.

According to a first embodiment, the reagents containing hydroxyl and/or amino functions (compounds of formula **A, B and D** if present) and the diisocyanate(s) (compound of formula **C)** are used in stoechiometric proportions. In other words, the stoechiometric index ratio **Ic** is equal to 1. Advantageously according to this embodiment, **CP** with high molecular weight are achieved.

In the context of the invention, the stoichiometric index ratio is defined by **Ic = 2Nc / (2Na + 2Nb + Nd).**

Otherwise, it is possible to use one or more of the reagents in excess.

According to a second embodiment, the at least one diisocyanate is used in excess. According to this embodiment, the index ratio **Ic** is above 1, and in particular above 1 and up to 1.1. According to this embodiment, the obtained **CP** will be a branched copolymer.

According to a third embodiment, the branching agent of formula **D** may be introduced in excess. An excess of branching agent leads to a branched **CP** and improves its mechanical properties.

Preferably, when the branching agent of formula **D** is present, the index ratio **Ic** is equal to 1.

The **CP** according to the invention may be prepared in solution in a solvent or mixture of solvents, or without solvent. When used, the solvent should be inert. Examples of solvents that may be used in the context of the invention are m-xylene, THF (tetrahydrofuran), DMSO (dimethylsulfoxide), chloroform, TBAF (tetrabutylammonium fluoride), and PMA (propylene glycol methyl ether acetate).

In a preferred embodiment, the reaction is performed without solvent.

Whether prepared with ou without solvent, the reaction mixture should be homogeneous.

For better reproducibilty, the **CP** is preferably prepared without moisture and under inert gas, usually under nitrogen, argon or a mixture thereof. Otherwise, pre-dried reagents may be mixed together under non-controlled atmosphere if the mixing time is short (for example up to 15 min). The **CP** formed is preferentially cured under vacuum or inert gas.

The process for manufacturing **CP** according to the invention can be carried out at a temperature ranging from 20 to 80 °C.

The process for manufacturing **CP** according to the invention typically has a reaction time of from 5 to 240 minutes, depending on the temperature.

The process for manufacturing **CP** according to the invention may be carried out in a extruder or in a reactor, as detailed below.

- **preparation in an extruder**

According to a first embodiment, the **CP** is prepared by reactive extrusion. If so, the use of a twin-screw corotative extruder is preferred.

Typically, the length of the extruder is at least of 40 **L/D** (where **L** is the length in millimetre of the screws and **D** their diameter in millimetre). The length of the extruder can be as long as needed and can be fixed by one skilled in the art in order to achieve a reasonable yield. Yield is considered reasonable if the melt flow index is lower than 100 $cm^3.10\ min^{-1}$ (measured at 120°C under 2.16 kg), preferably lower than 50 $cm^3.10\ min^{-1}$, and even more preferably lower than 30 $cm^3$. $10min^{-1}$

Advantageously, the length of the extruder is 80 **L/D.**

According to a first embodiment, all reagents are introduced at the same time in the first heating zone of the extruder.

According to a second embodiment, all the reagents are not introduced simultaneously in the extruder. Advantageously according to this embodiment, the choice of the addition sequence allows to control the polymerisation reaction. For example, it is possible to pre-polymerise the long-chain hydroxyl or amino difunctionalised polysiloxane of formula **A** with the at least one diisocyanate of formula **C** before the addition of the chain extender of formula **B.** Diisocyanate(s)

can also be partly introduced in the first heating zone of the extruder and then poured again in the reaction mixture in a further heating zone. In all cases, the long-chain hydroxyl or amino difunctionalised polysiloxane of formula **A** is introduced in the first heating zone.

Out of the die, the formed **CP** can be pelletized or collected in batches.

- **preparation in a reactor**

According to a second embodiment, the **CP** is prepared by batch synthesis in a reactor.

According to this embodiment, all the reagents are introduced simultaneously in the reactor, or stepwise, similarly to what has been detailed above when the **CP** is prepared in an extruder.

**Copolymer**

The invention further relates to the **CP** obtained thanks to the process of preparation according to the invention.

The **CP** according to the invention has a high silicone content thanks to the use of a short-chain hydroxyl or amino difunctionalised polysiloxane of formula **B** as chain extender.

In the sense of the invention, the silicone content is defined by the content in weight of (Si(**R**)$_2$O) with **R** representing **R1**, **R2, R3, Ra** and **Rb** if present compared to the total weight of the **CP.**

In the context of the invention, the silicone content is of at least 90%, preferably at least 92%, and even more preferably at least 95%. In a particular embodiment, the silicone content is ranging from 92% to 99%, preferably from 95% to 98%. This high silicone content enables to achieve **CP** with low hardness, a good stability and a low viscosity, while keeping good mechanical properties.

In order to have such high silicone content, the hard segment ratio ranges from 1 to 94%, preferably from 5 to 50% and even more preferably from 8 to 20%.

In the context of the invention, the hard segment ratio is defined by HS = **(Nb*Mb** + **Nc*Mc)** / **(Na*Ma** + **Nb*Mb** + **Nc*Mc** + **Nd*Md),** with **Ma, Mb, Mc** and **Md** representing respectively the molecular weight of compounds of formula **A, B, C** and **D.**

The formation of hard segments may be achieved by adjusting the proportions of the long-chain difunctional polysiloxane of formula **A** and of the short-chain difunctional polysiloxane of formula **B.** In other words, the ratio **a/b** ranges from 2 to 200, preferentially from 2 to 100, more preferentially from to 3 to 40 and even more preferentially from 6 to 15. In the context of the invention, the short segment have a maximum of 15 siloxanes repetitive units (in other words, **b** is up to 15) so that they can be considered as chain extender in order to create proper hard segments.

Advantageously, the **CP** according to the invention has a low hardness, preferably below 60 Shore A, more preferably below 50 Shore A and even more preferably ranging from 1 to 40 Shore A. In the context of the invention, the hardness is measured with a Shore A durometer.

The use of siloxane-based chain extender of formula **B** also allows obtaining glass clear **CP,** showing that no phase separation occurs (contrary to what may be observed with hydrocarbonated chain extenders, giving opaque final products). In other words, the **CP** is translucid.

Advantageously, the **CP** according to the invention has almost no crystallinity.

The average molecular weights in number of the **CP** according to the invention are typically of from 50,000 to 200,000 g.mol$^{-1}$ and in from 80,000 to 150,000 g.mol$^{-1}$.

The **CP** according to the invention has an elastic behavior with high elongation at break. Advantageously, the **CP** has an elongation at break over 200%, and preferably over 500 %. In the context of the invention, the strain at breaking may be measured by tensile test at a speed of 50 mm.min$^{-1}$ and the elongation at break is determined according to NF ISO 527 standard.

Advantageously, the melting temperature of the **CP** according to the invention is below 140°C so that **CP** may be used in FDM-like printers. Typically the melting temperature of the **CP** ranges from 70 to 140 °C. In the context of the invention, the melting temperature is measured by DSC (heating ramp: 10 °C.min$^{-1}$).

The **CP** according to the invention presents a melt flow index ranging from 1 to 100, and preferably from 2 to 30 cm$^3$.10 min$^{-1}$ (measured at 120 °C and under 2.16 kg) which allows to process them by injection moulding, extrusion or even extrusion-like additive manufacturing processes. In the context of the invention, the melt flow index is measured according to NF ISO 1133 standard.

**Method of manufacturing a 3D article**

The invention further relates to a method of manufacturing a 3D article thanks to an additive technique.

The block copolymer **I** according to the invention is used as sole material in the additive process. In other words, the block copolymer **I** is not in a composition when used in additive process, but is printed as a sole component.

According to an advantageous embodiment, the additive technique is performed thanks to a 3D printer, in particular selected from a fused filament fabrication printer, a selective laser sintering printer, a selective laser melting printer, a material jet printer, a syringe extrusion printer and from a droplets deposit printer using for example the APF process (ARBURG Plastic Freeforming process). When a fused filament fabrication printer is used, a thermoplastic filament feeding device, a syringe pump extruder or a hopper/screw pellet conveying system as feeding device are used.

Additive techniques are known from one skilled in the art and will not be further detailed here.

Finally, the invention also relates to a 3D article made from the **CP** according to the invention, or obtained according to the method of manufacturing a 3D article according to the invention. The obtained 3D article may be used in various applications, in particular medical applications such as anatomical models.

In the context of the invention, a "3D printed article" (or "three dimensional printed article" or "3D article") refers to an object built by a 3D printing system, such as a fused filament fabrication printer using a thermoplastic filament feeding device, a syringe pump extruder or a hopper/screw pellet conveying system as feeding device, and a droplets deposit printer using for example the APF process (ARBURG Plastic Freeforming process).

## Examples

In the examples below, the melting temperatures ($T_m$) are measured by differential scanning calorimetry (DSC), with heating and cooling ramps at 10 °C.min$^{-1}$. Stress at breaking ($\sigma_b$) and strain at breaking ($\varepsilon_b$) are measured by tensile test at a speed of 50 mm.min$^{-1}$. Melt volume-flow rates (MVRs) are determined with a melt flow index (MFI) measuring device and hardness is measured with a Shore A durometer.

### Example 1: synthesis in a reactor

- **CP1.1 to CP1.3**

In a 20 L continuous stirred-tank reactor heated at 80 °C, 2700 g of bisaminopropyl-terminated polydimethylsiloxane (Silmer NH Di-50, molar weight 4244 g.mol$^{-1}$, sold by Siltech) are charged. Subsequently, 139 g of room temperature 1,6-hexamethylene diisocyanate (Desmodur H, molar weight 168 g.mol$^{-1}$, sold by Covestro) are added dropwise to the siloxane. The mixture is stirred during two minutes at 80 °C and then 162 g of bisaminopropyl-terminated polydimethylsiloxane (Silmer NH Di-8, molar weight 840 g.mol$^{-1}$, sold by Siltech) at 80 °C are added to the reaction mixture. The mixture is then stirred at 80 °C for two more minutes and dropped into a plastic container. The mixture is finally cured for two hours at 80 °C under vacuum, to yield **CP1.1.**

For **CP1.2,** the same procedure than for **CP1.1** is used except that 216 ppm in weight (1.02 $\times$ 10$^{-3}$ mol, 618 ppm in molar) of room temperature dibutyltin dilaurate (DABCO T12N, molar weight 632 g.mol$^{-1}$, sold by Air Products) catalyst are added to the functionalised PDMS and mixed before the addition of the diisocyanate.

For **CP1.3,** the same procedure than for **CP1.1** is used except that 192 ppm in weight (1.02 $\times$ 10$^{-3}$ mol, 618 ppm in molar) of room temperature titanium 2-ethylhexyloxide (Tyzor TOT, molar weight 564 g.mol$^{-1}$, sold by Dorf Ketal) catalyst (instead of the DABCO T12N for **CP1.2)** are added to the functionalised PDMS and mixed before the addition of the diisocyanate.

Cooling gives a glass-clear polyurea polydimethylsiloxane block copolymer with a hard segments ratio of 10.0% and whose mechanical and thermal properties are described in **Table 1.** The silicone content (Si(**R**)$_2$O) is greater than 95% in weight.

**Table 1:** Properties of **CP1.1, CP1.2** and **CP1.3**

| Block copolymer | $I_c$ | $T_m$ [°C] | MVR 120 °C/2,16 kg [cm$^3$.10min$^{-1}$] | $\varepsilon_b$ [%] | Hardness [Sh. A] |
|---|---|---|---|---|---|
| **CP1.1** | 1,00 | - | - | - | - |
| **CP1.2** | 1,00 | * | 40 | 336 $\pm$ 23 | 7 $\pm$ 2 |
| **CP1.3** | 1,00 | 84 | 31 | 380 $\pm$ 29 | 8 $\pm$ 2 |

* Very broad and low intensity melting can be observed in the range of 50 to 100 °C, nevertheless, MVR measurement at 120 °C exhibit a good melting.

The results obtained with **CP1.1, CP1.2** and **CP1.3** show that without a catalyst, the obtained block copolymer cannot be considered as a solid polymer, but only as a visco-elastic material still having the ability to flow under standard pressure and temperature environment. The addition of a catalyst is therefore necessary to obtain high molecular weights and good mechanical properties when the polyurea organopolysiloxane block copolymer is synthetized in a reactor at

80 °C.

- **CP 1.4 to CP1.6**

In a 20 L continuous stirred-tank reactor heated at 80 °C, a mixture composed with 2550 g of bisaminopropyl-terminated polydimethylsiloxane (Silmer NH Di-50, molar weight 4244 $g.mol^{-1}$, sold by Siltech) and 150 g (5% in weight) of a branched monoaminoethyl-functional polydimethylsiloxane (Bluesil FLD 21643, molar weight 7619 $g.mol^{-1}$, sold by Elkem) is charged. Subsequently, 136 g of room temperature 1,6-hexamethylene diisocyanate (Desmodur H, molar weight 168 $g.mol^{-1}$, sold by Covestro) are added to the mixture. The mixture is stirred for two minutes at 80 °C and then 164 g bisaminopropyl-terminated polydimethylsiloxane (Silmer NH Di-8, molar weight 840 $g.mol^{-1}$, sold by Siltech) at 80 °C are added to the mixture. The mixture is then stirred at 80 °C for two more minutes and dropped into a plastic container. The mixture is finally cured for two hours at 80 °C under vacuum to yield **CP1.4.**

For **CP1.5,** the same procedure than for **CP1.4** is used except that 216 ppm in weight ($1.02 \times 10^{-3}$ mol, 630 ppm in molar) of room temperature dibutyltin dilaurate (DABCO T12N, molar weight 632 $g.mol^{-1}$, sold by Air Products) catalyst are added to the functionalised PDMS and mixed before the addition of the diisocyanate.

For **CP1.6,** the same procedure than for **CP1.4** is used except that 192 ppm in weight ($1.02 \times 10^{-3}$ mol, 630 ppm in molar) of room temperature titanium 2-ethylhexyloxide (Tyzor TOT, molar weight 564 $g.mol^{-1}$, sold by Dort Ketal) catalyst (instead of the DABCO T12N for **CP1.5)** are added to the functionalised PDMS and mixed before the addition of the diisocyanate.

Cooling gives a glass-clear polydimethylsiloxane/polyurea block copolymers with a hard segment ratio of 10.0% whose mechanical and thermal properties are described in the **Table 2.** The silicone content ($Si(\mathbf{R})_2O$) is greater than 95% in weight.

**Table 2:** Properties of **CP1.4** to **CP 1.6**

| Block copolymer | $I_c$ | $T_m$ [°C] | MVR 120 °C/2,16 kg [$cm^3.10min^{-1}$] | $\varepsilon_b$ [%] | Hardness [Sh. A] |
|---|---|---|---|---|---|
| **CP1.4** | 1,00 | - | - | - | - |
| **CP1.5** | 1,00 | -* | 26 | 490 ± 42 | 9 ± 2 |
| **CP1.6** | 1,00 | 81 | 20 | 542 ± 44 | 10 ± 2 |
| * Very broad and low intensity melting can be observed in the range of 50 to 100 °C, nevertheless, MVR measurement at 120 °C exhibit a good melting | | | | | |

The results obtained with **CP1.4** to **CP1.6** demonstrate the interest of a branched copolymer. In these examples, the branching is achieved by adding a branching agent. These examples also highlight that titanium-based catalysts are more efficient for these branched copolymers than tin-based catalysts. It is important to note that without a catalyst the material can still not be considered a solid polymer and flows under standard pressure and temperature environment.

- **CP 1.7 to CP1.11**

In a 20 L continuous stirred-tank reactor heated at 80 °C, 2700 g of bisaminopropyl-terminated polydimethylsiloxane (Silmer NH Di-50, molar weight 4244 $g.mol^{-1}$, sold by Siltech) are charged. Subsequently, 147 g of room temperature 1,6-hexamethylene diisocyanate (Desmodur H, molar weight 168 $g.mol^{-1}$, sold by Covestro) are added dropwise to the siloxane. The mixture is stirred for two minutes at 80 °C and then 152 g of bisaminopropyl-terminated polydimethylsiloxane (Silmer NH Di-8, molar weight 840 $g.mol^{-1}$, sold by Siltech) at 80 °C are added to the mixture. The mixture is then stirred at 80 °C for two more minutes and dropped into a plastic container. The mixture is finally cured for two hours at 80 °C under vacuum to yield **CP1.7.**

For **CP1.8,** the same procedure than for **CP1.7** is used except that 216 ppm in weight ($1.02 \times 10^{-3}$ mol, 605 ppm in molar) of room temperature dibutyltin dilaurate (DABCO T12N, molar weight 632 $g.mol^{-1}$, sold by Air Products) catalyst are added to the functionalised PDMS and mixed before the addition of the diisocyanate.

For **CP1.9,** the same procedure than for **CP1.7** is used except that 86 ppm in weight ($1.02 \times 10^{-3}$ mol, 605 ppm in molar) of room temperature titanium (triethanolaminato)isopropoxide (Tyzor TE, molar weight 253 $g.mol^{-1}$, sold by Dorf Ketal) catalyst (instead of the DABCO T12N for **CP1.8)** are added to the functionalised PDMS and mixed before the addition of the diisocyanate.

For **CP1.10,** the same procedure than for **CP1.7** is used except that 193 ppm in weight ($1.02 \times 10^{-3}$ mol, 605 ppm in molar) of room temperature titanium 2-ethylhexyloxide (Tyzor TOT, molar weight 564 $g.mol^{-1}$, sold by Dorf Ketal) catalyst (instead of the DABCO T12N for **CP1.8)** are added to the functionalised PDMS and mixed before the addition

of the diisocyanate.

For **CP1.11,** the same procedure than for **CP1.7** is used except that 116 ppm in weight (1.02 × $10^{-3}$ mol, 605 ppm in molar) of room temperature tetra-n-butyl titanate (TnBT, molar weight 340 $g.mol^{-1}$, sold by Catalytic Technologies) catalyst (instead of the DABCO T12N for **CP1.8)** are added to the functionalised PDMS and mixed before the addition of the diisocyanate.

Cooling gives glass-clear polydimethylsiloxane polyurea block copolymers with a hard segments fraction of 10.0% and whose mechanical and thermal properties are described in the **Table** 3 below. The silicone content (Si(**R**)$_2$O) is greater than 95% in weight.

**Table 3: Properties of CP1. 7 to CP1.11**

| Block copolymer | $I_c$ | $T_m$ [°C] | MVR 120 °C/2,16 kg [$cm^3.10min^{-1}$] | Hardness [Sh. A] |
|---|---|---|---|---|
| **CP1.7** | 1,07 | - | - | - |
| **CP1.8** | 1,07 | -* | 2 | 30 ± 2 |
| **CP1.9** | 1,07 | 81 | 2 | 35 ± 2 |
| **CP1.10** | 1,07 | 84 | 7 | 33 ± 2 |
| **CP1.11** | 1,07 | 75 | 3 | 37 ± 2 |
| * Very broad and low intensity melting can be observed in the range of 50 to 100 °C, nevertheless, MVR measurement at 120 °C exhibit a good melting | | | | |

The results obtained with **CP1.7** to **CP1.11** demonstrate the interest of a branched copolymer. In these examples, the branching is achieved by adding an excess of diisocyanate, forming therefore side branches through the formation of biurets on the copolymer. These examples also highlight that titanium-based catalysts are more efficient for these copolymers than tin-based catalysts. It is important to note that without a catalyst, the material can still not be considered a solid polymer and flows under standard pressure and temperature environment.

**Example 2: synthesis in an extruder**

- **CP 2.1 to CP2.3**

In order to prepare **CP2.1,** an 80 **L/D** 26 mm co-rotative twin-screw extruder from TSA Industrial with 15 heating zones and a temperature controlled die, a mixture composed with 3600 g of bisaminopropyl-terminated polydimethylsiloxane (Silmer NH Di-50, molar weight 4244 $g.mol^{-1}$, sold by Siltech) and 214 g of bisaminopropyl-terminated polydimethylsiloxane (Silmer NH Di-8, molar weight 840 $g.mol^{-1}$, sold by Siltech) was metered at 60 °C at a flow rate of 3814 $g.h^{-1}$ into the first heating zone.

In the second heating zone, room temperature 1,6-hexamethylene diisocyanate (Desmodur H, molar weight 168 g.mol-1, sold by Covestro) is added dropwise at a flow rate of 186 g.h-1.

The temperature profile of the heating zones is programmed as detailed in **Table 4:**

**Table 4: Temperature profile used for CP2.1**

| Zone | Z1 | Z2 | Z3 | Z4 | Z5 | Z6 | Z7 | Z8 | Z9 | Z10 | Z11 | Z12 | Z13 | Z14 | Z15 | Die |
|---|---|---|---|---|---|---|---|---|---|---|---|---|---|---|---|---|
| T [°C] | 110 | 120 | 130 | 140 | 150 | 150 | 150 | 150 | 140 | 140 | 140 | 140 | 140 | 140 | 150 | 150 |

The rotational speed is 250 RPM.

For **CP2.2,** the same procedure than for **CP2.1** is used except that 216 ppm in weight (1.37 × $10^{-3}$ mol, 617 ppm in molar) of room temperature dibutyltin dilaurate (DABCO T12N, molar weight 632 $g.mol^{-1}$, sold by Air Products) catalyst are added and mixed to the functionalised PDMS mixture metered in the first heating zone.

For **CP2.3,** the same procedure than for **CP2.1** is used except that 192 ppm in weight (1.37 × $10^{-3}$ mol, 617 ppm in molar) of room temperature titanium 2-ethylhexyloxide (Tyzor TOT, molar weight 564 $g.mol^{-1}$, sold by Dorf Ketal) catalyst (instead of the DABCO T12N for **CP2.2)** are added and mixed to the functionalised PDMS mixture metered in the first heating zone.

The material taken off at the die of the extruder is a polydimethylsiloxane/polyurea block copolymer with a hard segment ratio of 10.0% having the properties described in the **Table 5** below. All the final block copolymers have a

silicone ($Si(\mathbf{R})_2O$) content that is greater than 95% in weight.

**Table 5: Properties of CP2.1 to CP2.3**

| Block copolymer | $I_c$ | $T_m$ [°C] | MVR 120 °C/2,16 kg [$cm^3.10min^{-1}$] | $\varepsilon_b$ [%] | Hardness [Sh. A] |
|---|---|---|---|---|---|
| **CP2.1** | 1,00 | - | - | - | - |
| **CP2.2** | 1,00 | -* | 81 | 210 ± 14 | 7 ± 2 |
| **CP2.3** | 1,00 | 85 | 16 | 580 ± 29 | 30 ± 2 |
| * Very broad and low intensity melting can be observed in the range of 50 to 100 °C, nevertheless, MVR measurement at 120 °C exhibit a good melting | | | | | |

The results obtained with **CP2.1** to **CP2.3** show that without a catalyst the obtained block copolymer cannot be considered as a solid polymer, but only as a visco-elastic material still having the ability to flow under standard pressure and temperature environment. The addition of a catalyst is therefore necessary to obtain high molecular weights and good mechanical properties when the organopolysiloxane polyurea block copolymer is synthetized by reactive extrusion.

- **CP2.4 to CP2.6**

In order to prepare **CP2.4,** an 80 **L/D** 26 mm co-rotative twin-screw extruder from TSA Industrial with 15 heating zones and a temperature controlled die a mixture of 3400 g of bisaminopropyl-terminated polydimethylsiloxane (Silmer NH Di-50, molar weight 4244 $g.mol^{-1}$, sold by Siltech), 218 g of bisaminopropyl-terminated polydimethylsiloxane (Silmer NH Di-8, molar weight 840 $g.mol^{-1}$, sold by Siltech) and 200 g (5% in weight) of a branched monoaminoethyl-functional polydimethylsiloxane (Bluesil FLD 21643, molar weight 7619 $g.mol^{-1}$, sold by Elkem) was metered at 60 °C at a flow rate of 3818 $g.h^{-1}$ into the first heating zone.

In the second heating zone, room temperature 1,6-hexamethylene diisocyanate (Desmodur H, molar weight 168 g.mol-1, sold by Covestro) is added dropwise at a flow rate of 181 $g.h^{-1}$.

The temperature profile of the heating zones is programmed as detailed in **Table 6:**

**Table 6: Temperature profile used for CP2.4**

| Zone | Z1 | Z2 | Z3 | Z4 | Z5 | Z6 | Z7 | Z8 | Z9 | Z10 | Z11 | Z12 | Z13 | Z14 | Z15 | Die |
|---|---|---|---|---|---|---|---|---|---|---|---|---|---|---|---|---|
| T [°C] | 110 | 120 | 130 | 140 | 150 | 150 | 150 | 150 | 140 | 140 | 140 | 140 | 140 | 140 | 150 | 150 |

The rotational speed is 250 RPM.

For **CP2.5,** the same procedure than for **CP2.4** is used except that 216 ppm in weight ($1.37 \times 10^{-3}$ mol, 630 ppm in molar) of room temperature dibutyltin dilaurate (DABCO T12N, molar weight 632 $g.mol^{-1}$, sold by Air Products) catalyst are added and mixed to the functionalised PDMS mixture metered in the first heating zone.

For **CP2.6,** the same procedure than for **CP2.4** is used except that 193 ppm in weight ($1.37 \times 10^{-3}$ mol, 630 ppm in molar) of room temperature titanium 2-ethylhexyloxide (Tyzor TOT, molar weight 564 $g.mol^{-1}$, sold by Dorf Ketal) catalyst (instead of the DABCO T12N for **CP2.5)** are added and mixed to the functionalised PDMS mixture metered in the first heating zone.

The material taken off at the die of the extruder is a polydimethylsiloxane/polyurea block copolymer with a hard segment ratio of 10.0% having the properties described in **Table 7** below. All the final products have a silicone content ($Si(\mathbf{R})_2O$) that is greater than 95% in weight.

**Table 7: Properties of CP2.4 to 2.6**

| Block copolymer | $I_c$ | $T_m$ [°C] | MVR 120 °C/2,16 kg [$cm^3\cdot10min^{-1}$] | $\varepsilon_b$ [%] | Hardness [Sh. A] |
|---|---|---|---|---|---|
| **CP2.4** | 1,00 | - | - | - | - |
| **CP2.5** | 1,00 | -* | 79 | 234 ± 14 | 6 ± 2 |
| **CP2.6** | 1,00 | 84 | 14 | 550 ± 55 | 30 ± 2 |
| * Very broad and low intensity melting can be observed in the range of 50 to 100 °C, nevertheless, MVR measurement at 120 °C exhibit a good melting | | | | | |

The results obtained with **CP2.4** to **CP2.6** demonstrate the interest of a branched copolymer. In these examples, the branching is achieved by adding a branching agent. These examples also highlight that titanium-based catalysts are more efficient for these block copolymers than tin-based catalysts. It is important to note that without a catalyst, the material cannot be considered a solid polymer and flows under standard pressure and temperature environment.

- **CP2.7 to CP2.11**

In order to prepare **CP2.7,** an 80 **L/D** 26 mm co-rotative twin-screw extruder from TSA Industrial with 15 heating zones and a temperature controlled die, a mixture composed with 3600 g of bisaminopropyl-terminated polydimethylsiloxane (Silmer NH Di-50, molar weight 4244 $g.mol^{-1}$, sold by Siltech), 205 g of bisaminopropyl-terminated polydimethylsiloxane (Silmer NH Di-8, molar weight 840 $g.mol^{-1}$, sold by Siltech) was metered at 60 °C at a flow rate of 3805 $g.h^{-1}$ into the first heating zone.

In the second heating zone, room temperature 1,6-hexamethylene diisocyanate (Desmodur H, molar weight 168 $g.mol^{-1}$, sold by Covestro) is added dropwise at a flow rate of 197 $g.h^{-1}$.

The temperature profile of the heating zones is programmed as detailed in **Table 8.**

**Table 8: Temperature profile used for CP2.7**

| Zone | Z1 | Z2 | Z3 | Z4 | Z5 | Z6 | Z7 | Z8 | Z9 | Z10 | Z11 | Z12 | Z13 | Z14 | Z15 | Die |
|---|---|---|---|---|---|---|---|---|---|---|---|---|---|---|---|---|
| T [°C] | 110 | 120 | 130 | 140 | 150 | 150 | 150 | 150 | 140 | 140 | 140 | 140 | 140 | 140 | 150 | 150 |

The rotational speed is 250 RPM.

For **CP2.8,** the same procedure than for **CP2.7** is used except that 216 ppm in weight ($1.37 \times 10^{-3}$ mol, 602 ppm in molar) of room temperature dibutyltin dilaurate (DABCO T12N, molar weight 632 $g.mol^{-1}$, sold by Air Products) are added and mixed to the functionalised PDMS mixture metered in the first heating zone.

For **CP2.9,** the same procedure than for **CP2.7** is used except that 86 ppm in weight ($1.37 \times 10^{-3}$ mol, 602 ppm in molar) of room temperature titanium (triethanolaminato)isopropoxide (Tyzor TE, molar weight 253 $g.mol^{-1}$, sold by Dorf Ketal) catalyst (instead of the DABCO T12N for **CP2.8)** are added and mixed to the functionalised PDMS mixture metered in the first heating zone.

For **CP2.10,** the same procedure than for **CP2.7** is used except that 192 ppm in weight ($1.37 \times 10^{-3}$ mol, 602 ppm in molar) of room temperature titanium 2-ethylhexyloxide (Tyzor TOT, molar weight 564 $g.mol^{-1}$, sold by Dorf Ketal) catalyst (instead of the DABCO T12N for **CP2.8)** are added and mixed to the functionalised PDMS mixture metered in the first heating zone.

For **CP2.11,** the same procedure than for **CP2.7** is used except that 116 ppm in weight ($1.37 \times 10^{-3}$ mol, 602 ppm in molar) of room temperature tetra-n-butyl titanate (TnBT, molar weight 340 $g.mol^{-1}$, sold by Catalytic Technologies) catalyst (instead of the DABCO T12N for **CP2.8)** are added and mixed to the functionalised PDMS mixture metered in the first heating zone.

The material taken off at the die of the extruder is a polydimethylsiloxane/polyurea block copolymer with a hard segment ratio of 10.0% having the properties described in **Table 9** below. All the final products have a silicone content ($Si(\mathbf{R})_2O$) that is greater than 95% in weight.

**Table 9: Properties of CP2.7 to CP2.11**

| Block copolymer | $I_c$ | $T_m$ [°C] | MVR 120 °C/2,16 kg [$cm^3.10min^{-1}$] | $\varepsilon_b$ [%] | Hardness [Sh. A] |
|---|---|---|---|---|---|
| **CP2.7** | 1,07 | - | - | - | - |
| **CP2.8** | 1,07 | -* | 10 | 249 ± 19 | 7 ± 2 |
| **CP2.9** | 1,07 | 84 | 3 | 680 ± 53 | 37 ± 2 |
| **CP2.10** | 1,07 | 80 | 2 | 620 ± 21 | 38 ± 2 |
| **CP2.11** | 1,07 | 83 | 9 | 660 ± 46 | 37 ± 2 |
| * Very broad and low intensity melting can be observed in the range of 50 to 100 °C, nevertheless, MVR measurement at 120 °C exhibit a good melting | | | | | |

The results obtained with **CP2.7** to **CP2.11** demonstrate the interest of branched copolymers. In these examples, the branching is achieved by adding an excess of diisocyanate, forming therefore side branches through the formation

of biurets on the copolymer. These examples also highlight that titanium-based catalysts are more efficient for these copolymers than tin-based catalysts. It is important to note that without a catalyst, the material can still not be considered a solid polymer and flows under standard pressure and temperature environment.

**Conclusion**

For all the examples previously described, the silicone-based urethane-urea copolymers have a silicone content greater than 95% in weight. The minimum strain at break is higher than 210% and maximum strain at break as high as 680% can be achieved. The hardness of all the different samples is in the range 0 to 38 Shore A.

The quantities of all the reactants used are summarised in **Table 10** below.

**Table 10: quantity of the reactants used in the examples**

| Block copolymers | Component A [mol] | Component B [mol] | Component C [mol] | Component D [mol] |
|---|---|---|---|---|
| CP1.1-CP1.3 | 0.636 | 0.193 | 0.827 | - |
| CP1.4-CP1.6 | 0.601 | 0.195 | 0.810 | 0.020 |
| CP1.7-CP1.11 | 0.636 | 0.181 | 0.875 | - |
| CP2.1-CP2.3 | 0.848 | 0.255 | 1.107 | - |
| CP2.4-CP2.6 | 0.801 | 0.260 | 1.077 | 0.026 |
| CP2.7-CP2.11 | 0.848 | 0.244 | 1.173 | - |

As defined previously, the molar ratio in percentage of the chain extender of formula **B** regarding all the polysiloxane components used in the formulation is **Nb/(Na+Nb+Nd).**

The molar ratio in percentage of the diisocyanate of formula **C** regarding all the components used in the formulation is **Nc/(Na+Nb+Nc+Nd].**

The molar ratio in percentage of the branching agent of formula **D** regarding all the long-chain polysiloxane components is **Nd/(Na+Nd).**

The **Table 11** below summarises all these ratios of the exemplified block copolymers.

**Table 11: Summary of the compositions synthetized**

| Block copolymers | $I_c$ | $HS\%_W$ [%] | Component C Molar ratio [%] | Component B Molar ratio [%] | Component D Molar ratio [%] |
|---|---|---|---|---|---|
| CP1.1-CP1.3 | 1.00 | 10.0 | 49.9 | 23.3 | - |
| CP1.4-CP1.6 | 1.00 | 10.0 | 49.8 | 23.9 | 3.2 |
| CP1.7-CP1.11 | 1.07 | 10.0 | 51.7 | 22.1 | - |
| CP2.1-CP2.3 | 1.00 | 10.0 | 50.1 | 23.1 | - |
| CP2.4-CP2.6 | 1.00 | 10.0 | 49.7 | 23.9 | 3.2 |
| CP2.7-CP2.11 | 1.07 | 10.0 | 51.7 | 22.3 | - |

**Example 3: 3D printing of CP1.2**

**CP1.2** was printed in a FDM-like 3D printer with the printing conditions described hereafter.

*Materials*

A 3D printer Cosmed 333, XY cartesian Z decoupled (TOBECA, FRA) was used with:

- Movement limit: 10 µm,
- Print volume: 300*300*300 mm,

- No control of the external environment,
- Type of deposit: Pneumatic with Ultimus V pressure controller 1-7 bars (Nordson EFD, USA),
- Syringe Optimum (Nordson EFD, USA) 10 $cm^3$ with standard piston and cap (Nordson EFD, USA) and 40 $\mu$m metal needle (FISNAR, USA).

*Printer preparation*

Preparation of the feeding cartridges with the silicone-based polyurethane-polyurea copolymer:

- Three quarter filling of the syringe with pellets of the material,
- Closing the syringe with plunger and stopper,
- Melting and thermal stabilisation of the product for 4 hours at a temperature above the melting temperature $T_m$.

*3D printing*

The following characteristics are used:

- Printing software: Repetier Host,
- Slicing software: Slic3r,
- Printing height: 400 $\mu$m,
- Printing width: 400 $\mu$m,
- Printing speed: 5 $mm.s^{-1}$,
- Speed vacuum displacement: 50 $mm.s^{-1}$,
- Printing temperature: 95 °C
- Deposition pressure: 1 to 7 bars (depending on formulation), preferably 4 to 6 bars.

With **CP1.2,** an ear model has been printed **(Figure 1** and **Figure 2).** As the silicone-based urethane-urea copolymers are viscous thermoplastic material, the printings have been done without any support printing even for the overhanging parts of the objects.

**Example 4: 3D printing of CP 1.4**

**CP1.4** was printed in a droplet deposition 3D printer with the printing conditions described hereafter.

*Materials*

A 3D printer Arburg Freeformer 200-3X version 2/3:

- Units of discharge: 2,
- X, Y, Z movement,
- Printing chamber dimension: 15 × 25 × 0.1 to 40 cm,
- Useful printing surface: 200 $cm^2$.

*3D printing*

- Hooper 30°C - 120°C-130°C-140°C (Nozzle),
- Chamber temperature : 60°C,
- Thickness of the layer 250 $\mu$m,
- Printing speed 20 mm/s.

With **CP1.4,** some dumbbells have been printed **(Figure 3** and **Figure 4).**

**Claims**

**1.** - A process for preparing a polyurea or polyurethane organopolysiloxane block copolymer **(I)** having a silicone

content of at least 90% in weight relative to the total weight of the organosiloxane block copolymer and comprising the steps of:

1) providing the following compounds:

a) a long-chain hydroxyl or amino difunctionalised polysiloxane of formula **(A):**

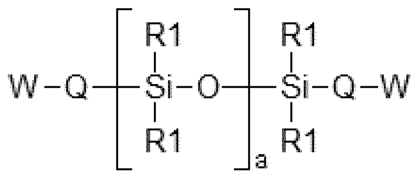

**(A),**

b) a chain extender which is a short-chain hydroxyl or amino difunctionalised polysiloxane of formula **(B):**

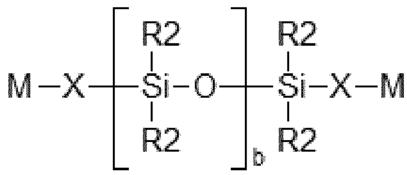

**(B),**

c) at least one diisocyanate of formula **(C):**

O=C=N-Y-N=C=O **(C),**

d) optionally a branching agent which is a hydroxyl or amino monofunctional polysiloxane of formula **(D):**

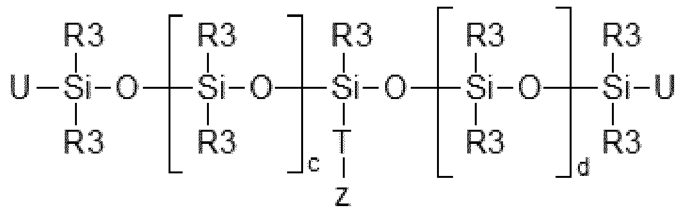

**(D),**

e) and a catalyst **(E),**

2) adding **Nb** mol of the chain extender of formula **(B), Nc** mol of the at least one diisocyanate of formula **(C)** and optionally **Nd** mol of the branching agent of formula **(D),** to **Na** mol of the long-chain hydroxyl or amino difunctionalised polysiloxane of formula **(A),** wherein:

- **-Q-, -T-** and **-X-** are identical or different, and represent a (C1-C20) alkylene group, eventually in which one or more $-CH_2-$ are replaced by -O-, or represent a (C6-C22) arylene group,
- **-M, -W and -Z** are identical or different, and represent -OH or-NH**R',** with **-R'** representing -H, a (C1-C10) alkyl group, or a (C6-22) aryl group,
- **-U** is a (C1-C20) alkyl group, eventually in which one or more $-CH_2-$are replaced by -O-, or represents a (C6-C22) aryl group,
- **-Y-** represents a (C1-C36) alkylene group, a (C6-C13) arylene group or an organopolysiloxane,
- **-R1, -R2** and **-R3** are identical or different, and represent a (C1-C20) alkyl group, eventually substituted by one or more -F and/or-Cl,
- **a** is an integer ranging from 30 to 1000,
- **b** is an integer ranging from 2 to 15,
- **c** is an integer ranging from 10 to 200,

- **d** is an integer ranging from 10 to 200,
- the ratio **a/b** ranges from 2 to 200,
- the molar ratio **Nb** / **(Na** + **Nb** + **Nd)** ranges from 5% to 60%,
- the molar ratio **Nc** / **(Na** + **Nb** + **Nc** + **Nd)** ranges from 45 to 55%,
- the molar ratio **Nd** / **(Na** + **Nd)** ranges from 0 to 20%, and
- the hard segment ratio ranges from 1 to 94%, the hard segment ratio being defined by **HS** = **(Nb*Mb** + **Nc*Mc)** / **(Na*Ma** + **Nb*Mb** + **Nc*Mc** + **Nd*Md),** with **Ma, Mb, Mc** and **Md** representing respectively the molecular weight of compounds of formula **(A), (B), (C)** and **(D).**

**2.** **- The** process according to claim 1 wherein **-R1, -R2** and **-R3** are identical or different and represent a (C1-C10) alkyl group, and in particular methyl group, eventually substituted by -F and/or -Cl.

**3.** - The process according to claim 1 or 2 wherein **-Q-, -T-** and **-X-** are identical or different and represent a (C1-C10) alkylene group.

**4.** - The process according to anyone of the preceding claims wherein **-M, -W** and **-Z** are identical and preferably represent -NH**R'** with **-R'** representing preferably -H.

**5.** - The process according to anyone of the preceding claims wherein **-Y-**represents a (C3-C13) alkylene.

**6.** - The process according to anyone of the preceding claims wherein only one diisocyanate of formula (C) is used.

**7.** - The process according to anyone of the preceding claims wherein the at least one diisocyanate of formula **(C)** is present in stoichiometric proportions compared to compounds of formula **(A), (B)** and **(D)** if present, meaning that the value of the stoichiometric index ratio **Ic** is equal to 1, the stoichiometric index ratio being defined by **Ic** = 2**Nc** / **(**2**Na** + 2**Nb** + **Nd).**

**8.** **-** The process according to anyone of claims 1 to 6 wherein the at least one diisocyanate **(C)** is present in non-stoichiometric proportions compared to compounds of formula **(A), (B)** and **(D)** if present, meaning that the value of the stoichiometric index ratio **Ic** is different from 1, and in particular superior to 1, the stoichiometric index ratio being defined by **Ic =** 2**Nc / (**2**Na** + 2**Nb** + **Nd),** and preferably the diisocyanate **(C)** is present in excess such that **1 < Ic** ≤ 1.10.

**9.** - The process according to anyone of the preceding claims wherein the catalyst **(E)** is chosen among copper based catalysts, zirconium based catalysts, tin based catalysts and titanium based catalysts.

**10.** - The process according to anyone of the preceding claims, wherein the reaction is carried out in a chemical reactor.

**11.** - The process according to claim 10 wherein the long-chain polysiloxane of formula **(A)** is dissolved in a solvent, or a mixture of solvents, before the addition of the chain extender of formula **(B),** the at least one diisocyanate of formula **(C),** optionally the branching agent of formula **(D),** and the catalyst **(E).**

**12.** - The process according to claim 10 or 11 wherein the chain extender of formula **(B),** the at least one diisocyanate of formula **(C),** the branching agent of formula **(D)** if present, and the catalyst **(E)** are added simultaneously to the long-chain polysiloxane of formula **(A).**

**13.** - The process according to anyone of claims 10 to 11 wherein the chain extender of formula **(B),** the at least one diisocyanate of formula **(C),** the branching agent of formula **(D)** if present, and the catalyst **(E)** are added one after the other to the polysiloxane of formula **(A),** in any order.

**14.** - The process according to anyone of claims 1 to 9 wherein the reaction is carried out in an extruder, preferably a twin-screw extruder and the long-chain hydroxyl or amino difunctionalised polysiloxane of formula **(A)** is introduced in the first heating zone of the extruder.

**15.** - The process according to claim 14 wherein the polysiloxane of formula **(A),** the chain extender of formula **(B),** the at least one diisocyanate of formula **(C),** the branching agent of formula **(D)** if present, and the catalyst **(E)** are all introduced in the first heating zone of the extruder.

**16.** - The process according to claim 14 wherein the polysiloxane of formula **(A)** is introduced in the first heating zone of the extruder, and at least one of the chain extender of formula **(B),** the at least one diisocyanate of formula **(C),** the branching agent of formula **(D)** if present, and the catalyst **(E)** are introduced in the second or subsequent heating zone of the extruder.

**17.** - The polyurea or polyurethane organopolysiloxane block copolymer **(I)** obtained according to the process according to anyone of the preceding claims.

**18.** - The polyurea or polyurethane organopolysiloxane block copolymer **(I)** according to claim 17 having a hardness ranging from 0 to 60 Shore A, the hardness being measured with a Shore A durometer.

**19.** - The polyurea or polyurethane organopolysiloxane block copolymer **(I)** according to anyone of claims 17 to 18 having an elongation at break of at least 200% and preferably of at least 500%, the elongation at break being determined according to NF ISO 527 standard.

**20.** - The polyurea or polyurethane organopolysiloxane block copolymer **(I)** according to anyone of claims 17 to 19 having a melting temperature ranging from 70 to 140 °C, the melting temperature being measured by DSC with a heating ramp of 10 $°C.min^{-1}$.

**21.** - The polyurea or polyurethane organopolysiloxane block copolymer **(I)** according to anyone of claims 17 to 20 having a melt flow index ranging from 1 to 100 $cm^3.10\ min^{-1}$ at 120°C under 2.16 kg, the melt flow index being measured according to NF ISO 1133 standard.

**22.** - Method for manufacturing a 3D article by an additive technique using the polyurea or polyurethane organopolysiloxane block copolymer **(I)** according to anyone of claims 17 to 21.

**23.** - The method according to the preceding claim wherein the 3D article is manufactured with a 3D printer selected from a fused filament fabrication printer, a syringe extrusion printer, a droplet deposit printer, a selective laser sintering printer, a selective laser melting printer, and a material jet printer.

## Patentansprüche

**1.** Verfahren zur Herstellung eines Polyharnstoff- oder Polyurethan-Organopolysiloxan-Blockcopolymers (I) mit einem Siliziumgehalt von mindestens 90 Gew.-% bezogen auf das Gesamtgewicht des Organosiloxan-Blockcopolymers und umfassend die folgenden Schritte des:

1) Bereitstellens der folgenden Verbindungen:

a) ein langkettiges hydroxyl- oder amino-difunktionalisiertes Polysiloxan der Formel (A):

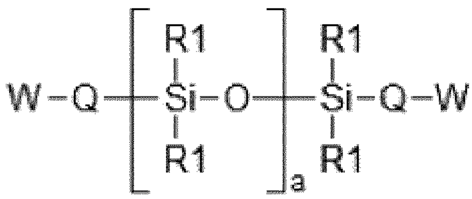

**(A),**

b) einen Kettenverlängerer, der ein kurzkettiges hydroxyl- oder amino-difunktionalisiertes Polysiloxan der Formel (B) ist:

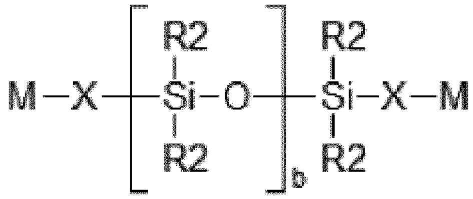

**(B)**,

c) zumindest ein Diisocyanat der Formel (C):

O=C=N-Y-N=C=O **(C)**,

d) gegebenenfalls ein Verzweigungsmittel, das ein hydroxyl- oder amino-monofunktional(isiertes) Polysiloxan der Formel (D) ist:

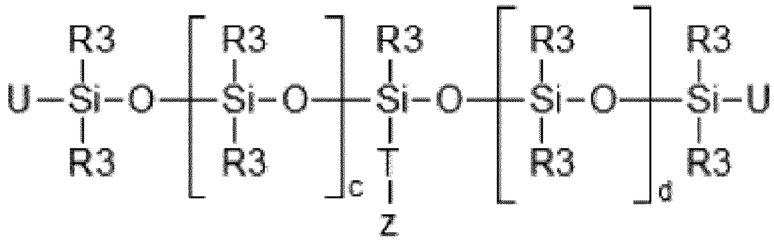

**(D)**,

e) und einen Katalysator (E),

2) Zugebens von Nb mol des Kettenverlängerers der Formel (B), Nc mol des zumindest einen Diisocyanats der Formel (C) und gegebenenfalls Nd mol des Verzweigungsmittels der Formel (D), zu Na mol des langkettigen hydroxyl- oder aminodifunktionalisierten Polysiloxans der Formel (A),

wobei:

- -Q-, -T- und -X- identisch oder unterschiedlich sind und für eine (C1-C20)-Alkylengruppe stehen, in welcher gegebenenfalls ein oder mehrere -$CH_2$- durch -O-ersetzt sind, oder für eine (C6-C22)-Arylengruppe stehen,
- -M, -W und -Z identisch oder unterschiedlich sind und für -OH oder -NHR' stehen, wobei -R' für -H, eine (C1-C10)-Alkylgruppe oder eine (C6-22)-Arylgruppe steht,
- -U eine (C1-C20)-Alkylgruppe ist, in welcher gegebenenfalls ein oder mehrere-$CH_2$- durch -O- ersetzt sind, oder für eine (C6-C22)-Arylgruppe steht,
- -Y- für eine (C1-C36)-Alkylengruppe, eine (C6-C13)-Arylengruppe oder ein Organopolysiloxan steht,
- -R1, -R2 und -R3 identisch oder unterschiedlich sind und für eine (C1-C20)-Alkylgruppe stehen, gegebenenfalls substituiert durch ein oder mehrere -F und/oder-Cl,
- a eine ganze Zahl von 30 bis 1000 ist,
- b eine ganze Zahl von 2 bis 15 ist,
- c eine ganze Zahl von 10 bis 200 ist,
- d eine ganze Zahl von 10 bis 200 ist,
- das Verhältnis a/b von 2 bis 200 reicht,
- das molare Verhältnis Nb / (Na + Nb + Nd) von 5 % bis 60 % reicht,
- das molare Verhältnis Nc / (Na + Nb + Nc + Nd) von 45 bis 55 % reicht,
- das molare Verhältnis Nd / (Na + Nd) von 0 bis 20 % reicht, und
- das Hartsegment-Verhältnis von 1 bis 94 % reicht, wobei das Hartsegment-Verhältnis definiert ist durch HS = (Nb * Mb + Nc * Mc) / (NA * Ma + Nb * Mb + Nc * Mc + Nd * Md), wobei Ma, Mb, Mc und Md jeweils für das Molekulargewicht der Verbindungen der Formel (A), (B), (C) und (D) stehen.

**2.** Verfahren nach Anspruch 1, wobei -R1, -R2 und -R3 identisch oder unterschiedlich sind und für eine (C1-C10)-Alkylgruppe und insbesondere Methylgruppe stehen, die gegebenenfalls durch -F und/oder -Cl substituiert ist.

**3.** Verfahren nach Anspruch 1 oder 2, wobei -Q-, -T- und -X- identisch oder unterschiedlich sind und für eine (C1-C10)-Alkylengruppe stehen.

**4.** Verfahren nach einem der vorhergehenden Ansprüche, wobei -M, -W und -Z identisch sind und vorzugsweise für -NHR' stehen, wobei -R' vorzugsweise für -H steht.

**5.** Verfahren nach einem der vorhergehenden Ansprüche, wobei -Y- für (C3-C13)-Alkylen steht.

**6.** Verfahren nach einem der vorhergehenden Ansprüche, wobei nur ein Diisocyanat der Formel (C) verwendet wird.

**7.** Verfahren nach einem der vorhergehenden Ansprüche, wobei das zumindest eine Diisocyanat der Formel (C) in stöchiometrischen Anteilen im Vergleich zu Verbindungen der Formel (A), (B) und (D), falls vorhanden, vorhanden ist, was bedeutet, dass der Wert des stöchiometrischen Indexverhältnisses Ic gleich 1 ist, wobei das stöchiometrische Indexverhältnis durch Ic = 2Nc / (2Na + 2Nb + Nd) definiert wird.

**8.** Verfahren nach einem der Ansprüche 1 bis 6, wobei das zumindest eine Diisocyanat (C) in nicht-stöchiometrischen Anteilen im Vergleich zu Verbindungen der Formel (A), (B) und (D), falls vorhanden, vorhanden ist, was bedeutet, dass der Wert des stöchiometrischen Indexverhältnisses Ic von 1 verschieden und insbesondere größer als 1 ist, wobei das stöchiometrische Indexverhältnis durch Ic = 2Nc / (2Na + 2Nb + Nd) definiert ist, und vorzugsweise das Diisocyanat (C) im Überschuss vorhanden ist, so dass $1 < Ic \leq 1,10$ gilt.

**9.** Verfahren nach einem der vorhergehenden Ansprüche, wobei der Katalysator (E) aus kupferbasierten Katalysatoren, zirkoniumbasierten Katalysatoren, zinnbasierten Katalysatoren und titanbasierten Katalysatoren ausgewählt ist.

**10.** Verfahren nach einem der vorhergehenden Ansprüche, wobei die Reaktion in einem chemischen Reaktor ausgeführt wird.

**11.** Verfahren nach Anspruch 10, wobei das langkettige Polysiloxan der Formel (A) vor der Zugabe des Kettenverlängerers der Formel (B), des zumindest einen Diisocyanats der Formel (C), gegebenenfalls des Verzweigungsmittels der Formel (D) und des Katalysators (E) in einem Lösungsmittel oder einer Mischung von Lösungsmitteln gelöst wird.

**12.** Verfahren nach Anspruch 10 oder 11, wobei der Kettenverlängerer der Formel (B), das zumindest eine Diisocyanat der Formel (C), das Verzweigungsmittel der Formel (D), falls vorhanden, und der Katalysator (E) gleichzeitig zu dem langkettigen Polysiloxan der Formel (A) zugegeben werden.

**13.** Verfahren nach einem der Ansprüche 10 bis 11, wobei der Kettenverlängerer der Formel (B), das zumindest eine Diisocyanat der Formel (C), das Verzweigungsmittel der Formel (D), falls vorhanden, und der Katalysator (E) nacheinander zu dem Polysiloxan der Formel (A) in beliebiger Reihenfolge zugegeben werden.

**14.** Verfahren nach einem der Ansprüche 1 bis 9, wobei die Reaktion in einem Extruder, vorzugsweise einem Doppelschneckenextruder, durchgeführt wird und das langkettige hydroxyl- oder amino-difunktionalisierte Polysiloxan der Formel (A) in die erste Heizzone des Extruders eingebracht wird.

**15.** Verfahren nach Anspruch 14, wobei das Polysiloxan der Formel (A), der Kettenverlängerer der Formel (B), das zumindest eine Diisocyanat der Formel (C), das Verzweigungsmittel der Formel (D), falls vorhanden, und der Katalysator (E) alle in die erste Heizzone des Extruders eingebracht werden.

**16.** Verfahren nach Anspruch 14, wobei das Polysiloxan der Formel (A) in die erste Heizzone des Extruders eingebracht wird, und zumindest eines von dem Kettenverlängerer der Formel (B), dem zumindest einen Diisocyanat der Formel (C), dem Verzweigungsmittel der Formel (D), falls vorhanden, und dem Katalysator (E) in die zweite oder nachfolgende Heizzone des Extruders eingebracht wird.

**17.** Polyharnstoff- oder Polyurethan-Organopolysiloxan-Blockcopolymer (I), erhalten gemäß dem Verfahren nach einem der vorhergehenden Ansprüche.

**18.** Polyharnstoff- oder Polyurethan-Organopolysiloxan-Blockcopolymer (I) nach Anspruch 17, das eine Härte im Bereich von 0 bis 60 Shore A aufweist, wobei die Härte mit einem Shore-A-Durometer gemessen wird.

**19.** Polyharnstoff- oder Polyurethan-Organopolysiloxan-Blockcopolymer (I) nach einem der Ansprüche 17 bis 18, das eine Bruchdehnung von mindestens 200 % und vorzugsweise von mindestens 500 % aufweist, wobei die Bruchdehnung gemäß der Norm NF ISO 527 bestimmt wird.

**20.** Polyharnstoff- oder Polyurethan-Organopolysiloxan-Blockcopolymer (I) nach einem der Ansprüche 17 bis 19, das eine Schmelztemperatur im Bereich von 70 bis 140 °C aufweist, wobei die Schmelztemperatur durch DSC mit einer Aufheizrampe von 10 $°C.min^{-1}$ gemessen wird.

**21.** Polyharnstoff- oder Polyurethan-Organopolysiloxan-Blockcopolymer (I) nach einem der Ansprüche 17 bis 20, das einen Schmelzflussindex im Bereich von 1 bis 100 $cm^3.10\ min^{-1}$ bei 120 °C unter 2,16 kg aufweist, wobei der Schmelzflussindex gemäß der Norm NF ISO 1133 gemessen wird.

**22.** Verfahren zur Herstellung eines 3D-Gegenstands durch eine additive Technik unter Verwendung des Polyharnstoff- oder Polyurethan-Organopolysiloxan-Blockcopolymers (I) nach einem der Ansprüche 17 bis 21.

**23.** Verfahren nach dem vorhergehenden Anspruch, wobei der 3D-Gegenstand mit einem 3D-Drucker hergestellt wird, der ausgewählt ist aus einem Schmelzfaden-Drucker, einem Spritzenextrusionsdrucker, einem Tröpfchenabscheidungs-Drucker, einem Drucker zur selektiven Lasersinterung, einem Drucker für selektives Laserschmelzen und einem Materialstrahldrucker.

**Revendications**

**1.** Procédé pour préparer un copolymère séquencé organopolysiloxane de polyurée ou polyuréthane (I) ayant une teneur en silicone d'au moins 90 % en poids par rapport au poids total du copolymère séquencé organosiloxane et comprenant les étapes de :

1) fourniture des composés suivants :

a) un polysiloxane à difonctionnalité hydroxyle ou amino à longue chaîne de formule (A) :

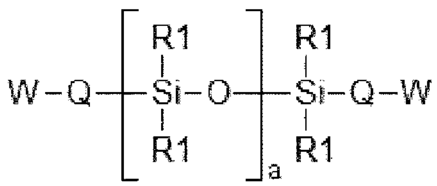

(A),

b) un agent d'allongement de chaîne qui est un polysiloxane à difonctionnalité hydroxyle ou amino à chaîne courte de formule (B) :

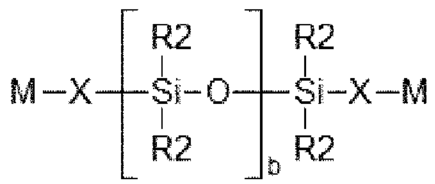

(B),

c) au moins un diisocyanate de formule (C) :

O=C=N-Y-N=C=O (C),

d) éventuellement un agent de ramification qui est un polysiloxane à monofonctionnalité hydroxyle ou amino de formule (D) :

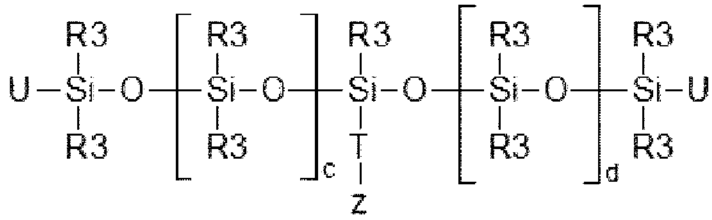

(D),

e) et un catalyseur (E),

2) addition de Nb moles de l'agent d'allongement de chaîne de formule (B), de Nc moles de l'au moins un diisocyanate de formule (C), et éventuellement de Nd moles de l'agent de ramification de formule (D), à Na moles du polysiloxane à difonctionnalité hydroxyle ou amino à longue chaîne de formule (A),

dans lequel :

- -Q-, -T- et -X- sont identiques ou différents et représentent un groupe alkylène en $C_1$ à $C_{20}$, éventuellement dans lequel un ou plusieurs - $CH_2$- sont remplacés par -O-, ou représentent un groupe arylène en $C_6$ à $C_{22}$,
- -M, -W et -Z sont identiques ou différents et représentent -OH ou -NHR' où -R' représente -H, un groupe alkyle en $C_1$ à $C_{10}$ ou un groupe aryle en $C_6$ à $C_{22}$,
- -U est un groupe alkyle en $C_1$ à $C_{20}$, éventuellement dans lequel un ou plusieurs -$CH_2$- sont remplacés par -O-, ou représente un groupe aryle en $C_6$ à $C_{22}$,
- -Y- représente un groupe alkylène en $C_1$ à $C_{36}$, un groupe arylène en $C_6$ à $C_{13}$ ou un organopolysiloxane,
- -R1, -R2 et -R3 sont identiques ou différents et représentent un groupe alkyle en $C_1$ à $C_{20}$ éventuellement substitué par un ou plusieurs -F et/ou -Cl,
- a est un nombre entier situé dans la plage allant de 30 à 1000,
- b est un nombre entier situé dans la plage allant de 2 à 15,
- c est un nombre entier situé dans la plage allant de 10 à 200,
- d est un entier situé dans la plage allant de 10 à 200,
- le rapport a/b est situé dans la plage allant de 2 à 200,
- le rapport molaire Nb / (Na + Nb + Nd) est situé dans la plage allant de 5 % à 60 %,
- le rapport molaire Nc / (Na + Nb + Nc + Nd) est situé dans la plage allant de 45 à 55 %,
- le rapport molaire Nd / (Na + Nd) est situé dans la plage allant de 0 à 20 %, et
- la proportion de segments durs est située dans la plage allant de 1 à 94 %, la proportion de segments durs étant définie par HS = (Nb*Mb + Nc*Mc) / (Na*Ma + Nb*Mb + Nc*Mc + Nd*Md), où Ma, Mb, Mc et Md représentent respectivement les masses moléculaires des composés de formules (A), (B), (C) et (D).

**2.** Procédé selon la revendication 1, dans lequel -R1, -R2 et -R3 sont identiques ou différents et représentent un groupe alkyle en $C_1$ à $C_{10}$, et en particulier un groupe méthyle, éventuellement substitué par -F et/ou -Cl.

**3.** Procédé selon la revendication 1 ou 2, dans lequel -Q-, -T- et -X- sont identiques ou différents et représentent un groupe alkylène en $C_1$ à $C_{10}$.

**4.** Procédé selon l'une quelconque des revendications précédentes, dans lequel -M, -W et -Z sont identiques et représentent de préférence -NHR' où -R' représente de préférence -H.

**5.** Procédé selon l'une quelconque des revendications précédentes, dans lequel -Y- représente un alkylène en $C_3$ à $C_{13}$.

**6.** Procédé selon l'une quelconque des revendications précédentes, dans lequel un seul diisocyanate de formule (C) est utilisé.

**7.** Procédé selon l'une quelconque des revendications précédentes, dans lequel l'au moins un diisocyanate de formule (C) est présent en des proportions stoechiométriques par rapport aux composés de formules (A) et (B) et (D) s'il est présent, ce qui signifie que la valeur du rapport des indices stoechiométriques Ic est égale à 1, le rapport des indices stoechiométriques étant défini par Ic = 2Nc / (2Na + 2Nb + Nd).

**8.** Procédé selon l'une quelconque des revendications 1 à 6, dans lequel l'au moins un diisocyanate (C) est présent

en des proportions non stoechiométriques par rapport aux composés de formules (A) et (B) et (D) s'il est présent, ce qui signifie que la valeur du rapport des indices stoechiométriques Ic est différente de 1, et en particulier supérieure à 1, le rapport des indices stoechiométriques étant défini par $Ic = 2Nc / (2Na + 2Nb + Nd)$, et de préférence le diisocyanate (C) est présent en excès de façon que $1 < Ic \leq 1{,}10$.

**9.** Procédé selon l'une quelconque des revendications précédentes, dans lequel le catalyseur (E) est choisi parmi les catalyseurs à base de cuivre, les catalyseurs à base de zirconium, les catalyseurs à base d'étain et les catalyseurs à base de titane.

**10.** Procédé selon l'une quelconque des revendications précédentes, dans lequel la réaction est mise en oeuvre dans un réacteur chimique.

**11.** Procédé selon la revendication 10, dans lequel le polysiloxane à longue chaîne de formule (A) est dissous dans un solvant, ou un mélange de solvants, avant l'addition de l'agent d'allongement de chaîne de formule (B), de l'au moins un diisocyanate de formule (C), éventuellement de l'agent de ramification de formule (D), et du catalyseur (E).

**12.** Procédé selon la revendication 10 ou 11, dans lequel l'agent d'allongement de chaîne de formule (B), l'au moins un diisocyanate de formule (C), l'agent de ramification de formule (D) s'il est présent, et le catalyseur (E) sont ajoutés simultanément au polysiloxane à longue chaîne de formule (A).

**13.** Procédé selon l'une quelconque des revendications 10 et 11, dans lequel l'agent d'allongement de chaîne de formule (B), l'au moins un diisocyanate de formule (C), l'agent de ramification de formule (D) s'il est présent, et le catalyseur (E) sont ajoutés les uns après les autres au polysiloxane de formule (A), dans un ordre quelconque.

**14.** Procédé selon l'une quelconque des revendications 1 à 9, dans lequel la réaction est mise en oeuvre dans une extrudeuse, de préférence une extrudeuse double vis, et le polysiloxane à difonctionnalité hydroxyle ou amino à longue chaîne de formule (A) est introduit dans la première zone de chauffage de l'extrudeuse.

**15.** Procédé selon la revendication 14, dans lequel le polysiloxane de formule (A), l'agent d'allongement de chaîne de formule (B), l'au moins un diisocyanate de formule (C), l'agent de ramification de formule (D) s'il est présent, et le catalyseur (E) sont tous introduits dans la première zone de chauffage de l'extrudeuse.

**16.** Procédé selon la revendication 14, dans lequel le polysiloxane de formule (A) est introduit dans la première zone de chauffage de l'extrudeuse et au moins l'un parmi l'agent d'allongement de chaîne de formule (B), l'au moins un diisocyanate de formule (C), l'agent de ramification de formule (D) s'il est présent, et le catalyseur (E) sont introduits dans la deuxième zone de chauffage ou une zone de chauffage subséquente de l'extrudeuse.

**17.** Copolymère séquencé organopolysiloxane de polyurée ou polyuréthane (I) obtenu conformément au procédé de l'une quelconque des revendications précédentes.

**18.** Copolymère séquencé organopolysiloxane de polyurée ou polyuréthane (I) selon la revendication 17, ayant une dureté située dans la plage allant de 0 à 60 Shore A, la dureté étant mesurée avec un duromètre Shore A.

**19.** Copolymère séquencé organopolysiloxane de polyurée ou polyuréthane (I) selon l'une quelconque des revendications 17 et 18, ayant un allongement à la rupture d'au moins 200 % et de préférence d'au moins 500 %, l'allongement à la rupture étant déterminé conformément à la norme NF ISO 527.

**20.** Copolymère séquencé organopolysiloxane de polyurée ou polyuréthane (I) selon l'une quelconque des revendications 17 à 19, ayant un point de fusion situé dans la plage allant de 70 à 140°C, le point de fusion étant mesuré par DSC avec une vitesse de montée en température de $10°C.min^{-1}$.

**21.** Copolymère organopolysiloxane séquencé de polyurée ou polyuréthane (I) selon l'une quelconque des revendications 17 à 20, ayant un indice de fluidité à chaud situé dans la plage allant de 1 à 100 $cm^3.10\ min^{-1}$ à 120°C sous 2,16 kg, l'indice de fluage étant mesuré conformément à la norme NF ISO 1133.

**22.** Procédé de fabrication d'un article 3D par une technique additive utilisant le copolymère organopolysiloxane séquencé de polyurée ou polyuréthane (I) de l'une quelconque des revendications 17 à 21.

**23.** Procédé selon la revendication précédente, dans lequel l'article 3D est fabriqué avec une imprimante 3D choisie parmi une imprimante de fabrication par dépôt de filament fondu, une imprimante par extrusion à seringue, une imprimante par dépôt de gouttelettes, une imprimante par frittage laser sélectif, une imprimante par fusion laser sélective, et une imprimante par jet de matériau.

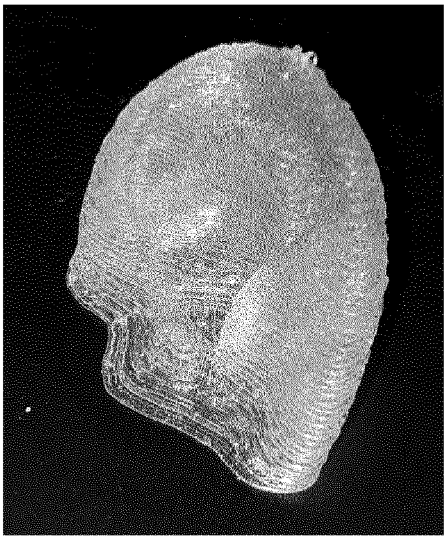

FIG. 1

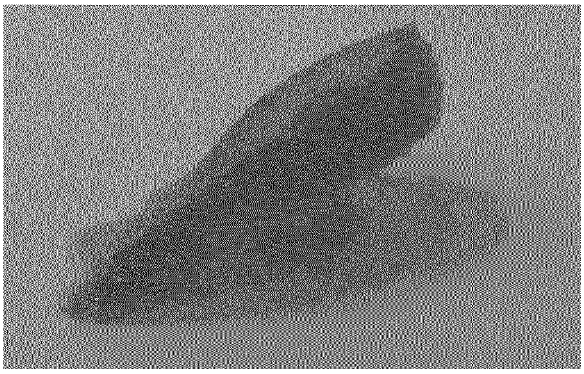

FIG. 2

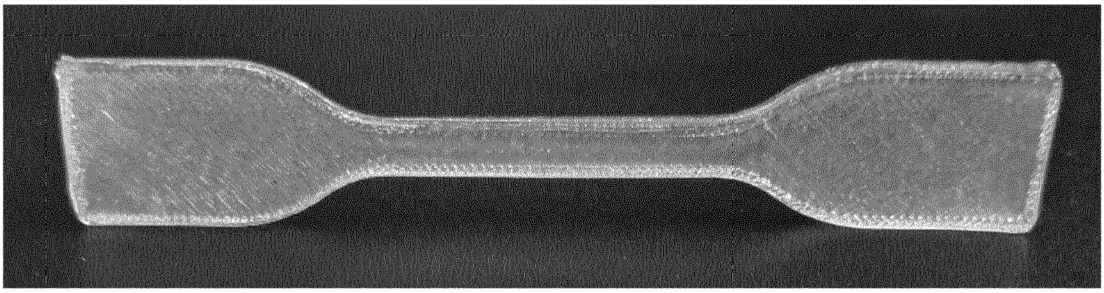

FIG. 3

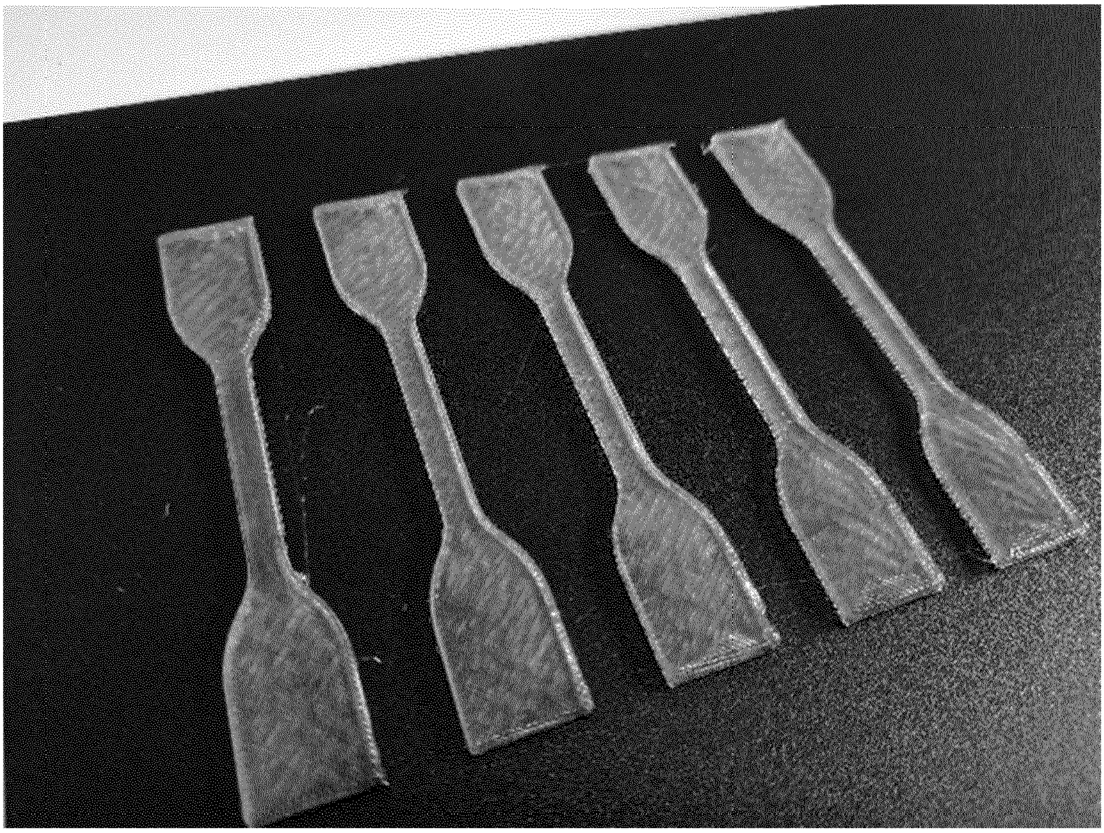

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017044735 A
- US 6355759 B
- US 20190276630 A